# EUROPEAN PATENT SPECIFICATION

(11) **EP 3 567 876 B1**
(45) Date of publication and mention of the grant of the patent: **26.10.2022**
(21) Application number: 17893842.9
(22) Date of filing: 09.03.2017
(51) Int. Cl.: H04W 4/80, G06Q 20/10

(54) **TRANSACTION PROCESSING METHOD AND TERMINAL**
TRANSAKTIONSVERARBEITUNGSVERFAHREN UND ENDGERÄT
PROCÉDÉ ET TERMINAL DE TRAITEMENT DE TRANSACTIONS

(30) Priority: 24.01.2017 CN 201710060394
(43) Date of publication of application: 13.11.2019
(73) Proprietor: Huawei Technologies Co., Ltd., Longgang District Shenzhen, Guangdong 518129 (CN)
(72) Inventor: MEI, Jingqing, Shenzhen Guangdong 518129 (CN)
(74) Representative: Gill Jennings & Every LLP
(86) International application number: PCT/CN2017/076200
(87) International publication number: WO 2018/137277

(56) References cited:
- EP-A2- 2 442 254
- WO-A2-2013/116681
- CN-A- 102 714 829
- CN-A- 103 973 340
- CN-A- 105 722 005
- CN-U- 204 347 912
- US-A1- 2009 023 476
- US-A1- 2015 326 999
- Harvey Lehpamer: "RFID Design Principles" In: "RFID Design Principles", 31 December 2007 (2007-12-31), Artech House, XP055219663, ISBN: 978-1-59693-194-7 pages 0-293,

## Description

### TECHNICAL FIELD

Embodiments of the present invention relate to the communications field, and in particular, to a transaction processing method and a terminal.

### BACKGROUND

Near field communication (Near Field Communication, NFC) is a short-range wireless communications technology based on radio frequency identification (Radio Frequency Identification, RFID), to be specific, magnetic induction is used to implement communication between terminals within a short distance. A user can securely and quickly exchange information or perform a transaction, for example, near-field payment, by only making terminals touch or approach each other.

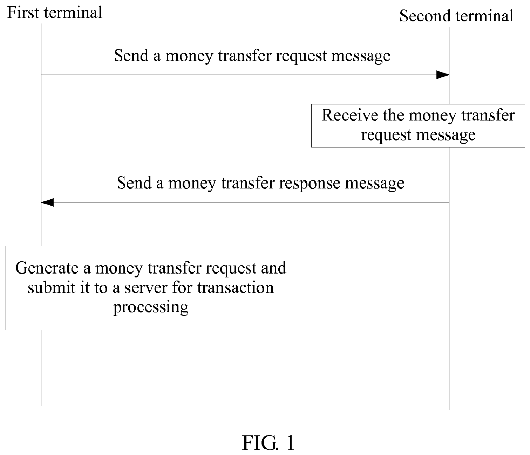

For example, a first terminal and a second terminal need to perform near-field payment. As shown in FIG. 1, when a transaction is initiated, the first terminal sends a money transfer request (Money Transfer Request, MTR) message to the second terminal. The MTR message is used to instruct the second terminal to feed back payee or payment account information required by a transaction. During implementation, the MTR message may further include payment application identifier information used by the first terminal for transaction, for example, WeChat or Alipay. After receiving the MTR message, the second terminal sends a money transfer response (Money Transfer Response, MTS) message to the first terminal. The MTS message includes information used for transaction processing and fed back based on what is required in the MTR message, for example, account information corresponding to a payment application indicated in the MTR message. After receiving the MTS message, the first terminal generates a money transfer request and submits the money transfer request to a server for transaction processing. The server sends a transaction processing result to the first terminal and the second terminal. The transaction ends.

However, when terminals perform a transaction, both parties of the transaction possibly initiate a transaction. For example, the first terminal is a payer terminal, and the second terminal is a payee terminal. In a process of triggering a transaction, a payer may choose a payment function on a payer terminal, and make the payer terminal touch a payee terminal to initiate a transaction, or a payee may choose a payee function on a payee terminal, and make the payee terminal touch a payer terminal to initiate a transaction; alternatively, a payer and a payee separately perform a response operation, and make a payer terminal and a payee terminal touch each other. When one party initiates a transaction, the party does not know whether the other party also initiates a transaction. The first terminal and the second terminal simultaneously or almost simultaneously send MTR messages, and both the parties of the transaction separately wait for an MTS response from the other party. Consequently, a process is locked, and the transaction is timed out and fails, or two transactions are conducted. Therefore, how to resolve a money transfer request collision in near-field communication is a problem urgently to be resolved.

US 20150326999A1 disclosed a method for automatically setting a configuration allowing a communication between two wireless devices.

EP2442254A2 disclosed a method for a provide a near field communication device having low manufacturing costs and allowing a fast establishment of a connection with a reader/writer device.

RFID Design Principles, 31 December 2007(2007-12-31), Artech House discloses that if a collision does occur, the reader will inform all nearby tags.

### SUMMARY

Embodiments of the present invention provide a transaction processing method and a terminal, to resolve a problem of a money transfer request collision in near-field communication by determining validity of transaction information and a valid transaction initiator.

To resolve the foregoing technical problem, the embodiments of the present invention provide the following technical solutions:

A first aspect of the embodiments of the present invention provides a transaction processing method, including:
after a first terminal receives a first money transfer request message sent by a second terminal, if the first terminal sends a second money transfer request message to the second terminal simultaneously when the first terminal receives the first money transfer request message, or the first terminal sends a second money transfer request message to the second terminal within a preset period before or after a moment at which the first terminal receives the first money transfer request message, and the first terminal determines that a money transfer request collision exists, determining, by the first terminal, a processing manner of the first money transfer request message based on a role flag of the first terminal and/or a role flag of the second terminal, where the processing manner of the first money transfer request message is sending, by the first terminal, a first money transfer response message to the second terminal and skipping, by the second terminal, replying to the second money transfer request message, to be specific, determining, by the first terminal, the second terminal as a transaction initiator, where the first money transfer response message is used to reply to the first money transfer request message; or skipping, by the first terminal, replying to the first money transfer request message, to be specific, determining, by the first terminal, the first terminal as a transaction initiator, and receiving or waiting to receive a second money transfer response message sent by the second terminal to the first terminal, where the second money transfer response message is used to reply to the second money transfer request message, the first money transfer request message includes the role flag of the second terminal, the role flag of the second terminal is a payer role flag or a payee role flag, the second money transfer request message includes the role flag of the first terminal, and the role flag of the first terminal is a payer role flag or a payee role flag.

According to the transaction processing method provided in the embodiments of the present invention, after the first terminal receives the first money transfer request message sent by the second terminal, if the first terminal sends the second money transfer request message to the second terminal simultaneously when the first terminal receives the first money transfer request message, or the first terminal sends the second money transfer request message to the second terminal within the preset period before or after the moment at which the first terminal receives the first money transfer request message, the first terminal determines that the money transfer request collision exists, and then, the first terminal determines, based on the role flag of the second terminal and/or the role flag of the first terminal, a transaction initiator and that a money transfer request message sent by the transaction initiator is a request message for initiating a transaction, so that the first terminal sends the first money transfer response message to the second terminal, in response to the first money transfer request message sent by the second terminal, and the second terminal skips replying to the second money transfer request message sent by the first terminal, namely, the second terminal skips sending the second money transfer response message to the first terminal and ignores the second money transfer request message sent by the first terminal; or the first terminal skips replying to the first money transfer request message sent by the second terminal, namely, the first terminal skips sending the first money transfer response message to the second terminal and ignores the first money transfer request message sent by the second terminal, and the first terminal further receives or waits to receive the second money transfer response message sent by the second terminal, in response to the second money transfer request message sent by the first terminal. This effectively resolves a problem of a money transfer request collision in near-field communication.

It should be noted that the role flag of the second terminal is preconfigured by the second terminal or determined simultaneously when or before the second terminal sends the first money transfer request message. Similarly, the role flag of the first terminal is preconfigured by the first terminal or determined simultaneously when or before the first terminal sends the second money transfer request message.

With reference to the first aspect, in a possible implementation, the skipping, by the first terminal, replying to the first money transfer request message includes: when the role flag of the first terminal is a payer role flag and/or the role flag of the second terminal is a payee role flag, skipping, by the first terminal, replying to the first money transfer request message, and receiving or waiting to receive the second money transfer response message sent by the second terminal, where the second money transfer response message is used to reply to the second money transfer request message.

Therefore, the first terminal determines, based on that the role flag of the second terminal is a payee role flag and/or the role flag of the first terminal is a payer role flag, a transaction initiator and that a money transfer request message sent by the transaction initiator is a request message for initiating a transaction, so that the first terminal skips replying to the first money transfer request message sent by the second terminal, namely, the first terminal skips sending the first money transfer response message to the second terminal and ignores the first money transfer request message sent by the second terminal, and the first terminal further receives or waits to receive the second money transfer response message sent by the second terminal, in response to the second money transfer request message sent by the first terminal. This effectively resolves a problem of a money transfer request collision in near-field communication.

With reference to the first aspect, in another possible implementation, the sending, by the first terminal, a first money transfer response message to the second terminal includes: when the role flag of the first terminal is a payee role flag and/or the role flag of the second terminal is a payer role flag, sending, by the first terminal, the first money transfer response message to the second terminal, and skipping, by the second terminal, replying to the second money transfer request message.

Therefore, the first terminal determines, based on that the role flag of the second terminal is a payer role flag and/or the role flag of the first terminal is a payee role flag, a transaction initiator and that a money transfer request message sent by the transaction initiator is a request message for initiating a transaction, so that the first terminal sends the first money transfer response message to the second terminal, in response to the first money transfer request message sent by the second terminal, and the second terminal skips replying to the second money transfer request message sent by the first terminal, namely, the second terminal skips sending the second money transfer response message to the first terminal and ignores the second money transfer request message sent by the first terminal. This effectively resolves a problem of a money transfer request collision in near-field communication.

It should be noted that from the prospective of transaction roles, a payer usually has more considerations than a payee when selecting a transaction manner. When the payer and the payee are both consumer accounts, it is more appropriate that the payer initiates a transaction.

With reference to the first aspect, in another possible implementation, the first money transfer request message further includes a payment account attribute of the second terminal, the second money transfer request message further includes a payment account attribute of the first terminal, and the payment account attribute is a personal account or a merchant account; and the skipping, by the first terminal, replying to the first money transfer request message includes: when the role flag of the first terminal is a payer role flag and/or the role flag of the second terminal is a payee role flag, and the payment account attribute of the second terminal is a personal account, skipping, by the first terminal, replying to the first money transfer request message, and receiving or waiting to receive the second money transfer response message sent by the second terminal, where the second money transfer response message is used to reply to the second money transfer request message.

Therefore, the first terminal determines, based on that the role flag of the second terminal is a payee role flag and/or the role flag of the first terminal is a payer role flag and that the payment account attribute of the second terminal is a personal account, a transaction initiator and that a money transfer request message sent by the transaction initiator is a request message for initiating a transaction, so that the first terminal skips replying to the first money transfer request message sent by the second terminal, namely, the first terminal skips sending the first money transfer response message to the second terminal and ignores the first money transfer request message sent by the second terminal, and the first terminal further receives or waits to receive the second money transfer response message sent by the second terminal, in response to the second money transfer request message sent by the first terminal. This effectively resolves a problem of a money transfer request collision in near-field communication.

When the role flag of the first terminal is a payee role flag and/or the role flag of the second terminal is a payer role flag, and the payment account attribute of the first terminal is a merchant account, the first terminal skips replying to the first money transfer request message, and receives or waits to receive the second money transfer response message sent by the second terminal, where the second money transfer response message is used to reply to the second money transfer request message. Therefore, when a payee uses a merchant account, initiating a transaction by the payee can reduce operations of a payer terminal, and reduce energy consumption of the payer terminal.

Therefore, the first terminal determines, based on that the role flag of the second terminal is a payer role flag and/or the role flag of the first terminal is a payee role flag and that the payment account attribute of the first terminal is a merchant account, a transaction initiator and that a money transfer request message sent by the transaction initiator is a request message for initiating a transaction, so that the first terminal sends the first money transfer response message to the second terminal, in response to the first money transfer request message sent by the second terminal, and the second terminal skips replying to the second money transfer request message sent by the first terminal, namely, the second terminal skips sending the second money transfer response message to the first terminal and ignores the second money transfer request message sent by the first terminal. This effectively resolves a problem of a money transfer request collision in near-field communication.

With reference to the first aspect, in another possible implementation, the first money transfer request message further includes a payment account attribute of the second terminal, the second money transfer request message further includes a payment account attribute of the first terminal, and the payment account attribute is a personal account or a merchant account; and the sending, by the first terminal, a first money transfer response message to the second terminal includes: when the role flag of the first terminal is a payer role flag and/or the role flag of the second terminal is a payee role flag, and the payment account attribute of the second terminal is a merchant account, sending, by the first terminal, the first money transfer response message to the second terminal, and skipping, by the second terminal, replying to the second money transfer request message.

Therefore, the first terminal determines, based on that the role flag of the second terminal is a payer role flag and/or the role flag of the first terminal is a payee role flag and that the payment account attribute of the second terminal is a merchant account, a transaction initiator and that a money transfer request message sent by the transaction initiator is a request message for initiating a transaction, so that the first terminal sends the first money transfer response message to the second terminal, in response to the first money transfer request message sent by the second terminal, and the second terminal skips replying to the second money transfer request message sent by the first terminal, namely, the second terminal skips sending the second money transfer response message to the first terminal and ignores the second money transfer request message sent by the first terminal. This effectively resolves a problem of a money transfer request collision in near-field communication.

When the role flag of the first terminal is a payee role flag and/or the role flag of the second terminal is a payer role flag, and the payment account attribute of the first terminal is a personal account, the first terminal sends the first money transfer response message to the second terminal, and the second terminal skips replying to the second money transfer request message.

Therefore, the first terminal determines, based on that the role flag of the second terminal is a payer role flag and/or the role flag of the first terminal is a payee role flag and that the payment account attribute of the first terminal is a personal account, a transaction initiator and that a money transfer request message sent by the transaction initiator is a request message for initiating a transaction, so that the first terminal sends the first money transfer response message to the second terminal, in response to the first money transfer request message sent by the second terminal, and the second terminal skips replying to the second money transfer request message sent by the first terminal, namely, the second terminal skips sending the second money transfer response message to the first terminal and ignores the second money transfer request message sent by the first terminal. This effectively resolves a problem of a money transfer request collision in near-field communication.

With reference to the first aspect and the foregoing possible implementations, in another possible implementation, the determining, by the first terminal, a processing manner of the first money transfer request based on a role flag of the second terminal and/or a role flag of the first terminal if a money transfer request collision exists specifically includes: if the money transfer request collision exists, determining, by the first terminal, whether the role flag of the first terminal is the same as the role flag of the second terminal, and if they are different, determining, by the first terminal, the processing manner of the first money transfer request based on the role flag of the second terminal and/or the role flag of the first terminal.

With reference to the foregoing possible implementation, in another possible implementation, the method further includes: determining, by the first terminal, whether the role flag of the first terminal is the same as the role flag of the second terminal, and if they are the same, sending, by the first terminal, an abnormality notification message to the second terminal, where the abnormality notification message is used to indicate that there is an error in a current transaction; or skipping, by the first terminal, replying to the first money transfer request message, to end a current transaction; or skipping, by the first terminal, replying to the first money transfer request message, and indicating, to a user by using one or more of a user interface image, sound, vibration, and the like, that there is an error in a current transaction, to end the current transaction.

With reference to the first aspect and the foregoing possible implementations, in another possible implementation, after the receiving, by a first terminal, a first money transfer request message sent by a second terminal, the method further includes:
if the first terminal determines that the money transfer request collision does not exist, sending, by the first terminal, a first money transfer response message to the second terminal, where the first money transfer response message is used to reply to the first money transfer request message.

A second aspect of the embodiments of the present invention provides a transaction processing method, including:
after a first terminal receives a first money transfer request message sent by a second terminal, if the first terminal sends a second money transfer request message to the second terminal simultaneously when the first terminal receives the first money transfer request message, or the first terminal sends a second money transfer request message to the second terminal within a preset period before or after a moment at which the first terminal receives the first money transfer request message, and the first terminal determines that a money transfer request collision exists, determining, by the first terminal, a processing manner of the first money transfer request message based on a capability flag of the first terminal and/or a capability flag of the second terminal, where the processing manner of the first money transfer request message is sending, by the first terminal, a first money transfer response message to the second terminal and skipping, by the second terminal, replying to the second money transfer request message, to be specific, determining, by the first terminal, the second terminal as a transaction initiator, where the first money transfer response message is used to reply to the first money transfer request message; or skipping, by the first terminal, replying to the first money transfer request message, to be specific, determining, by the first terminal, the first terminal as a transaction initiator, and receiving or waiting to receive a second money transfer response message sent by the second terminal to the first terminal, where the second money transfer response message is used to reply to the second money transfer request message, the first money transfer request message includes the capability flag of the second terminal, the capability flag of the second terminal is used to indicate whether the second terminal is capable of submitting a transaction processing request to a transaction server, the second money transfer request message includes the capability flag of the first terminal, and the capability flag of the first terminal is used to indicate whether the first terminal is capable of submitting a transaction processing request to the transaction server.

According to the transaction processing method provided in the embodiments of the present invention, after receiving the first money transfer request message sent by the second terminal, the first terminal determines that the money transfer request collision exists, and then, the first terminal determines, based on the capability flag of the second terminal and/or the capability flag of the first terminal, a transaction initiator and that a money transfer request message sent by the transaction initiator is a request message for initiating a transaction, so that the first terminal sends the first money transfer response message to the second terminal, in response to the first money transfer request message sent by the second terminal, and the second terminal skips replying to the second money transfer request message sent by the first terminal, namely, the second terminal skips sending the second money transfer response message to the first terminal and ignores the second money transfer request message sent by the first terminal; or the first terminal skips replying to the first money transfer request message sent by the second terminal, namely, the first terminal skips sending the first money transfer response message to the second terminal and ignores the first money transfer request message sent by the second terminal, and further waits for the second money transfer response message sent by the second terminal, in response to the second money transfer request message sent by the first terminal. This effectively resolves a problem of a money transfer request collision in near-field communication.

With reference to the second aspect, in a possible implementation, the sending, by the first terminal, a first money transfer response message to the second terminal includes: when the capability flag of the first terminal indicates that the first terminal is incapable of submitting a transaction processing request to the transaction server, and the capability flag of the second terminal indicates that the second terminal is capable of submitting a transaction processing request to the transaction server, sending, by the first terminal, the first money transfer response message to the second terminal, and skipping, by the second terminal, replying to the second money transfer request message.

Therefore, after receiving the first money transfer request message sent by the second terminal, the first terminal determines that the money transfer request collision exists, and then, the first terminal determines, based on the capability flag of the second terminal and the capability flag of the first terminal, a terminal capable of submitting a transaction processing request to the transaction server as a transaction initiator and that a money transfer request message sent by the transaction initiator is a request message for initiating a transaction, so that a terminal incapable of submitting a transaction processing request to the transaction server sends a money transfer response message to the terminal capable of submitting a transaction processing request to the transaction server, to be specific, the first terminal sends the first money transfer response message to the second terminal, in response to the first money transfer request message sent by the second terminal, and the second terminal skips replying to the second money transfer request message sent by the first terminal, namely, the second terminal skips sending the second money transfer response message to the first terminal and ignores the second money transfer request message sent by the first terminal. This effectively resolves a problem of a money transfer request collision in near-field communication.

With reference to the second aspect, in another possible implementation, the skipping, by the first terminal, replying to the first money transfer request message includes: when the capability flag of the first terminal indicates that the first terminal is capable of submitting a transaction processing request to the transaction server, and the capability flag of the second terminal indicates that the second terminal is incapable of submitting a transaction processing request to the transaction server, skipping, by the first terminal, replying to the first money transfer request message, and receiving or waiting to receive the second money transfer response message sent by the second terminal, where the second money transfer response message is used to reply to the second money transfer request message.

Therefore, after receiving the first money transfer request message sent by the second terminal, the first terminal determines that the money transfer request collision exists, and then, the first terminal determines, based on the capability flag of the second terminal and the capability flag of the first terminal, a terminal capable of submitting a transaction processing request to the transaction server as a transaction initiator and that a money transfer request message sent by the transaction initiator is a request message for initiating a transaction, so that a terminal incapable of submitting a transaction processing request to the transaction server sends a money transfer response message to the terminal capable of submitting a transaction processing request to the transaction server, to be specific, the first terminal skips replying to the first money transfer request message sent by the second terminal, namely, the first terminal skips sending the first money transfer response message to the second terminal and ignores the first money transfer request message sent by the second terminal, and further waits for the second money transfer response message sent by the second terminal, in response to the second money transfer request message sent by the first terminal. This effectively resolves a problem of a money transfer request collision in near-field communication.

With reference to the second aspect, in another possible implementation, the sending, by the first terminal, a first money transfer response message to the second terminal includes: when the capability flag of the first terminal indicates that the first terminal is capable of submitting a transaction processing request to the transaction server, and the capability flag of the second terminal indicates that the second terminal is incapable of submitting a transaction processing request to the transaction server, sending, by the first terminal, the first money transfer response message to the second terminal, and skipping, by the second terminal, replying to the second money transfer request message.

With reference to the second aspect, in another possible implementation, the skipping, by the first terminal, replying to the first money transfer request message includes: when the capability flag of the first terminal indicates that the first terminal is incapable of submitting a transaction processing request to the transaction server, and the capability flag of the second terminal indicates that the second terminal is capable of submitting a transaction processing request to the transaction server, skipping, by the first terminal, replying to the first money transfer request message, and receiving or waiting to receive the second money transfer response message sent by the second terminal, where the second money transfer response message is used to reply to the second money transfer request message.

Therefore, after receiving the first money transfer request message sent by the second terminal, the first terminal determines that the money transfer request collision exists, and then, the first terminal determines, based on the capability flag of the second terminal and the capability flag of the first terminal, a terminal capable of submitting a transaction processing request to the transaction server as a transaction initiator and that a money transfer request message sent by the transaction initiator is a request message for initiating a transaction, so that the terminal capable of submitting a transaction processing request to the transaction server sends a money transfer response message to a terminal incapable of submitting a transaction processing request to the transaction server. This effectively resolves a problem of a money transfer request collision in near-field communication.

With reference to the second aspect, in another possible implementation, the first money transfer request message further includes a random number of the second terminal, the random number of the second terminal is generated randomly by the second terminal, the second money transfer request message further includes a random number of the first terminal, the random number of the first terminal is generated randomly by the first terminal, the random number of the first terminal is of a same length as the random number of the second terminal, and the sending, by the first terminal, a first money transfer response message to the second terminal includes: when the capability flag of the first terminal indicates that the first terminal is capable of submitting a transaction processing request to the transaction server, and the capability flag of the second terminal indicates that the second terminal is capable of submitting a transaction processing request to the transaction server, comparing, by the first terminal, the random number of the first terminal and the random number of the second terminal to determine whether they satisfy a first preset rule; and if yes, sending, by the first terminal, the first money transfer response message to the second terminal, and skipping, by the second terminal, replying to the second money transfer request message.

With reference to the second aspect, in another possible implementation, the first money transfer request message further includes a random number of the second terminal, the random number of the second terminal is generated randomly by the second terminal, the second money transfer request message further includes a random number of the first terminal, the random number of the first terminal is generated randomly by the first terminal, the random number of the first terminal is of a same length as the random number of the second terminal, and the skipping, by the first terminal, replying to the first money transfer request message includes: when the capability flag of the first terminal indicates that the first terminal is capable of submitting a transaction processing request to the transaction server, and the capability flag of the second terminal indicates that the second terminal is capable of submitting a transaction processing request to the transaction server, comparing, by the first terminal, the random number of the first terminal and the random number of the second terminal to determine whether they satisfy a first preset rule; and if no, skipping, by the first terminal, replying to the first money transfer request message, and receiving or waiting to receive the second money transfer request message sent by the second terminal.

It should be noted that the first preset rule is that the random number of the first terminal is greater than or equal to the random number of the second terminal; or the first preset rule is that the random number of the second terminal is greater than or equal to the random number of the first terminal; or the first preset rule is that when random numbers, in a same predetermined range, of the random number of the first terminal and the random number of the second terminal satisfy a first predetermined relationship, it is determined that a random number, out of the predetermined range, of the random number of the first terminal is greater than a random number, out of the predetermined range, of the random number of the second terminal, or that when random numbers, in a same predetermined range, of the random number of the first terminal and the random number of the second terminal do not satisfy a first predetermined relationship, it is determined that a random number, out of the predetermined range, of the random number of the first terminal is less than a random number, out of the predetermined range, of the random number of the second terminal, where the first predetermined relationship is that a random number, in the predetermined range, of the random number of the first terminal is greater than or equal to a random number, in the predetermined range, of the random number of the second terminal, or that a random number, in the predetermined range, of the random number of the first terminal is less than a random number, in the predetermined range, of the random number of the second terminal.

With reference to the second aspect, in another possible implementation, the first money transfer request message further includes a role flag of the second terminal, the role flag of the second terminal is a payer role flag or a payee role flag, the second money transfer request message further includes a role flag of the first terminal, and the role flag of the first terminal is a payer role flag or a payee role flag; and the sending, by the first terminal, a first money transfer response message to the second terminal includes: when the role flag of the first terminal is a payee role flag and/or the role flag of the second terminal is a payer role flag, and the capability flag of the second terminal indicates that the second terminal is capable of submitting a transaction processing request to the transaction server, sending, by the first terminal, the first money transfer response message to the second terminal, and skipping, by the second terminal, replying to the second money transfer request message; or when the role flag of the first terminal is a payer role flag and/or the role flag of the second terminal is a payee role flag, the capability flag of the first terminal indicates that the first terminal is incapable of submitting a transaction processing request to the transaction server, and the capability flag of the second terminal indicates that the second terminal is capable of submitting a transaction processing request to the transaction server, sending, by the first terminal, the first money transfer response message to the second terminal, and skipping, by the second terminal, replying to the second money transfer request message.

Therefore, after receiving the first money transfer request message sent by the second terminal, the first terminal determines that the money transfer request collision exists, and then, the first terminal determines a payer capable of submitting a transaction processing request to the transaction server as a transaction initiator, or determines a payee capable of submitting a transaction processing request to the transaction server as a transaction initiator when a payer is incapable of submitting a transaction processing request to the transaction server, so that the first terminal sends the first money transfer response message to the second terminal, in response to the first money transfer request message sent by the second terminal, and the second terminal skips replying to the second money transfer request message sent by the first terminal, namely, the second terminal skips sending the second money transfer response message to the first terminal and ignores the second money transfer request message sent by the first terminal. This effectively resolves a problem of a money transfer request collision in near-field communication.

With reference to the second aspect, in another possible implementation, the first money transfer request message further includes a role flag of the second terminal, the role flag of the second terminal is a payer role flag or a payee role flag, the second money transfer request message further includes a role flag of the first terminal, and the role flag of the first terminal is a payer role flag or a payee role flag; and the skipping, by the first terminal, replying to the first money transfer request message includes: when the role flag of the first terminal is a payer role flag and/or the role flag of the second terminal is a payee role flag, and the capability flag of the first terminal indicates that the first terminal is capable of submitting a transaction processing request to the transaction server, skipping, by the first terminal, replying to the first money transfer request message; or when the role flag of the first terminal is a payee role flag and/or the role flag of the second terminal is a payer role flag, the capability flag of the first terminal indicates that the first terminal is capable of submitting a transaction processing request to the transaction server, and the capability flag of the second terminal indicates that the second terminal is incapable of submitting a transaction processing request to the transaction server, skipping, by the first terminal, replying to the first money transfer request message.

Therefore, after receiving the first money transfer request message sent by the second terminal, the first terminal determines that the money transfer request collision exists, and then, the first terminal determines a payer capable of submitting a transaction processing request to the transaction server as a transaction initiator, or determines a payee capable of submitting a transaction processing request to the transaction server as a transaction initiator when a payer is incapable of submitting a transaction processing request to the transaction server, so that the first terminal skips replying to the first money transfer request message sent by the second terminal, namely, the first terminal skips sending the first money transfer response message to the second terminal and ignores the first money transfer request message sent by the second terminal, and further waits for the second money transfer response message sent by the second terminal, in response to the second money transfer request message sent by the first terminal. This effectively resolves a problem of a money transfer request collision in near-field communication.

With reference to the second aspect, in another possible implementation, the first money transfer request message further includes a role flag of the second terminal and a payment account attribute of the second terminal, the role flag of the second terminal is a payer role flag or a payee role flag, the second money transfer request message further includes a role flag of the first terminal and a payment account attribute of the first terminal, and the role flag of the first terminal is a payer role flag or a payee role flag; and the sending, by the first terminal, a first money transfer response message to the second terminal includes: when the role flag of the first terminal is a payer role flag and/or the role flag of the second terminal is a payee role flag, the capability flag of the second terminal indicates that the second terminal is capable of submitting a transaction processing request to the server, and the payment account attribute of the second terminal is a merchant account, sending, by the first terminal, the first money transfer response message to the second terminal; or when the role flag of the first terminal is a payee role flag and/or the role flag of the second terminal is a payer role flag, the capability flag of the second terminal indicates that the second terminal is capable of submitting a transaction processing request to the server, and the payment account attribute of the first terminal is a personal account, sending, by the first terminal, the first money transfer response message to the second terminal.

Therefore, after receiving the first money transfer request message sent by the second terminal, the first terminal determines that the money transfer request collision exists, and then, the first terminal determines a payee that is capable of submitting a transaction processing request to the transaction server and whose payment account attribute is a merchant account as a transaction initiator, or determines a payer capable of submitting a transaction processing request to the transaction server as a transaction initiator, so that the first terminal sends the first money transfer response message to the second terminal, in response to the first money transfer request message sent by the second terminal, and the second terminal skips replying to the second money transfer request message sent by the first terminal, namely, the second terminal skips sending the second money transfer response message to the first terminal and ignores the second money transfer request message sent by the first terminal. This effectively resolves a problem of a money transfer request collision in near-field communication.

With reference to the second aspect, in another possible implementation, the first money transfer request message further includes a role flag of the second terminal and a payment account attribute of the second terminal, the role flag of the second terminal is a payer role flag or a payee role flag, the second request message further includes a role flag of the first terminal and a payment account attribute of the first terminal, and the role flag of the first terminal is a payer role flag or a payee role flag; and the skipping, by the first terminal, replying to the first money transfer request message includes: when the role flag of the first terminal is a payee role flag and/or the role flag of the second terminal is a payer role flag, the capability flag of the first terminal indicates that the first terminal is capable of submitting a transaction processing request to the server, and the payment account attribute of the first terminal is a merchant account, skipping, by the first terminal, replying to the first money transfer request message; or when the role flag of the first terminal is a payer role flag and/or the role flag of the second terminal is a payee role flag, the capability flag of the first terminal indicates that the first terminal is capable of submitting a transaction processing request to the server, and the payment account attribute of the second terminal is a personal account, skipping, by the first terminal, replying to the first money transfer request message.

Therefore, after receiving the first money transfer request message sent by the second terminal, the first terminal determines that the money transfer request collision exists, and then, the first terminal determines a payee that is capable of submitting a transaction processing request to the transaction server and whose payment account attribute is a merchant account as a transaction initiator, or determines a payer capable of submitting a transaction processing request to the transaction server as a transaction initiator, so that the first terminal skips replying to the first money transfer request message sent by the second terminal, namely, the first terminal skips sending the first money transfer response message to the second terminal and ignores the first money transfer request message sent by the second terminal, and further waits for the second money transfer response message sent by the second terminal, in response to the second money transfer request message sent by the first terminal. This effectively resolves a problem of a money transfer request collision in near-field communication.

With reference to the second aspect and the foregoing possible implementations, in another possible implementation, the determining, by the first terminal, a processing manner of the first money transfer request message based on a capability flag of the first terminal and/or a capability flag of the second terminal if a money transfer request collision exists specifically includes: if the money transfer request collision exists, determining, by the first terminal, whether the capability flag of the first terminal indicates that the first terminal is incapable of submitting a transaction processing request to the transaction server and whether the capability flag of the second terminal indicates that the second terminal is incapable of submitting a transaction processing request to the transaction server; and if no, determining, by the first terminal, the processing manner of the first money transfer request message based on the capability flag of the first terminal and/or the capability flag of the second terminal.

With reference to the second aspect, in another possible implementation, after the receiving, by a first terminal, a first money transfer request message sent by a second terminal, the method further includes: if the first terminal determines that the money transfer request collision does not exist, sending, by the first terminal, a first money transfer request response to the second terminal, where the first money transfer request response is used to reply to the first money transfer request message.

The first terminal waits to receive the second money transfer response message sent by the second terminal. To be specific, a latency probably exists in a process of message interaction between the first terminal and the second terminal, and the first terminal has not received the second money transfer response message sent by the second terminal, and the first terminal is able to receive, within the preset period, the second money transfer response message sent by the second terminal; or an abnormality probably occurs in a process of message interaction between the first terminal and the second terminal, and the first terminal does not receive, within the preset period, the second money transfer response message sent by the second terminal, and in this case, the first terminal may report an error to end the transaction procedure.

A third aspect of the embodiments of the present invention provides a transaction processing method, including:
receiving, by a first terminal, a first message sent by a second terminal; determining, by the first terminal, whether the first message is a first negotiation message or a first money transfer request message, where the first negotiation message is used to instruct the first terminal to send a money transfer request message to the second terminal or instruct the second terminal to send a money transfer request message to the first terminal; and when the first message is the first negotiation message, determining, by the first terminal, whether the first terminal is used as a transaction initiator; and if the first terminal is used as the transaction initiator, sending, by the first terminal, a second money transfer request message to the second terminal; or if the first terminal is not used as the transaction initiator, sending, by the first terminal, a second negotiation message to the second terminal, where the second negotiation message is used to instruct the second terminal to send a money transfer request message to the first terminal; or when the first message is the first money transfer request message, sending, by the first terminal, a first money transfer response message to the second terminal, where the first money transfer response message is used to reply to the first money transfer request message.

According to the transaction processing method provided in the embodiments of the present invention, after receiving the first message sent by the second terminal, the first terminal determines whether the first message is a first negotiation message or a first money transfer request message; when the first message is the first negotiation message, the first terminal sends the second money transfer request message or the second negotiation message to the second terminal; or when the first message is the first money transfer request message, the first terminal determines the second terminal as the transaction initiator, and sends the first money transfer response message to the second terminal, in response to the first money transfer request message sent by the second terminal, and the second terminal skips replying to the second money transfer request message sent by the first terminal, namely, the second terminal skips sending a second money transfer response message to the first terminal and ignores the second money transfer request message sent by the first terminal. This effectively resolves a problem of a money transfer request collision in near-field communication.

A fourth aspect of the embodiments of the present invention provides a first terminal, including: a transceiver unit, configured to receive a first money transfer request message sent by a second terminal, where the first money transfer request message includes a role flag of the second terminal, and the role flag of the second terminal is a payer role flag or a payee role flag; and a processing unit, configured to: if determining that a money transfer request collision exists, determine a processing manner of the first money transfer request message based on the role flag of the second terminal and/or a role flag of the first terminal, where the processing manner of the first money transfer request message is that the transceiver unit is further configured to send a first money transfer response message to the second terminal, where the first money transfer response message is used to reply to the first money transfer request message, or that the processing unit is further configured to determine to skip replying to the first money transfer request message; and the money transfer request collision means that simultaneously when or within a preset period in which the first terminal receives the first money transfer request message, the first terminal sends a second money transfer request message to the second terminal, where the second money transfer request message includes the role flag of the first terminal, and the role flag of the first terminal is a payer role flag or a payee role flag.

A fifth aspect of the embodiments of the present invention provides a first terminal, including: a transceiver unit, configured to receive a first money transfer request message sent by a second terminal, where the first money transfer request message includes a capability flag of the second terminal, and the capability flag of the second terminal is used to indicate whether the second terminal is capable of submitting a transaction processing request to a transaction server; and a processing unit, configured to: if determining that a money transfer request collision exists, determine a processing manner of the first money transfer request message based on a capability flag of the first terminal and/or the capability flag of the second terminal, where the processing manner of the first money transfer request message is that the transceiver unit is further configured to send a first money transfer response message to the second terminal, where the first money transfer response message is used to reply to the first money transfer request message, or that the processing unit is further configured to determine to skip replying to the first money transfer request message; and the money transfer request collision means that simultaneously when or within a preset period in which the first terminal receives the first money transfer request message, the first terminal sends a second money transfer request message to the second terminal, where the second money transfer request message includes the capability flag of the first terminal, and the capability flag of the first terminal is used to indicate whether the first terminal is capable of submitting a transaction processing request to the transaction server.

A sixth aspect of the embodiments of the present invention provides a first terminal, including: a transceiver unit, configured to receive a first message sent by a second terminal; and a processing unit, configured to determine whether the first message is a first negotiation message or a first money transfer request message, where the first negotiation message is used to instruct the first terminal to send a money transfer request message to the second terminal or instruct the second terminal to send a money transfer request message to the first terminal, where the transceiver unit is further configured to: when the first message is the first negotiation message, the processing unit determines whether the first terminal is used as a transaction initiator, and if the first terminal is used as the transaction initiator, send a second money transfer request message to the second terminal; or if the first terminal is not used as the transaction initiator, send a second negotiation message to the second terminal, where the second negotiation message is used to instruct the second terminal to send a money transfer request message to the first terminal; or the transceiver unit is further configured to: when the first message is the first money transfer request message, send a first money transfer response message to the second terminal, where the first money transfer response message is used to reply to the first money transfer request message.

It should be noted that the first money transfer request message in the embodiments of the present invention further includes one or more sets of money transfer information supported by the second terminal, where the money transfer information includes at least one of the following information: a payment application identifier, an account type, and a payment account, the payment application identifier is used to uniquely identify a payment application, and the account type is used to indicate a type of a payment account, for example, an Alipay account or a bank account; the first money transfer response message includes one or more sets of money transfer information supported by the first terminal; the second money transfer request message further includes one or more sets of money transfer information supported by the first terminal; and the second money transfer response message includes one or more sets of money transfer information supported by the second terminal.

It should be noted that function modules in the fourth aspect, the fifth aspect, and the sixth aspect may be implemented by hardware, or may be implemented by hardware executing corresponding software. The hardware or the software includes one or more modules corresponding to the foregoing functions. For example, a transceiver is configured to complete functions of a receiving unit and a sending unit, a processor is configured to complete functions of the processing unit, and a memory is configured to store a program instruction used by the processor to process the transaction processing method in the embodiments of the present invention. The processor, the transceiver, and the memory are connected by using a bus and implement mutual communication. Specifically, reference may be made to functions of the first terminal in the transaction processing method provided in the first aspect, and functions of the first terminal in the transaction processing method provided in the second aspect.

According to a seventh aspect, an embodiment of this application provides a first terminal, including: a processor, a memory, a bus, and a communications interface. The memory is configured to store a computer execution instruction. The processor is connected to the memory by using the bus. When the first terminal runs, the processor executes the computer execution instruction stored in the memory, so that the first terminal performs the method according to any of the foregoing aspects.

According to an eighth aspect, an embodiment of this application provides a computer readable storage medium, configured to store a computer software instruction for use by the foregoing first terminal, and when the computer software instruction is run on a computer, the computer is caused to perform the method according to any of the foregoing aspects.

According to a ninth aspect, an embodiment of this application provides an instruction-containing computer program product, and when the product runs on a computer, the computer is caused to perform the method according to any of the foregoing aspects.

In addition, for technical effects brought by any design method in the fourth aspect to the ninth aspect, refer to the technical effects brought by different design methods in the first aspect to the third aspect. Details are not repeated herein.

In the embodiments of the present invention, names of the first terminal and the second terminal do not constitute any limitation on devices, and during actual implementation, these devices may have other names. The devices fall within the scope of the claims of the present invention and their equivalent technologies, provided that functions of the devices are similar to those in the embodiments of the present invention.

These aspects or other aspects of the embodiments of the present invention are more concise and understandable in the description of the following embodiments.

### BRIEF DESCRIPTION OF DRAWINGS

FIG. 1 is a schematic flowchart of a transaction processing method in the prior art;
FIG. 2 is a simplified schematic diagram of a system architecture applicable to an embodiment of the present invention according to an embodiment of the present invention;
FIG. 3 is a schematic structural diagram of a terminal according to an embodiment of the present invention;
FIG. 4 is a schematic flowchart of a transaction processing method according to an embodiment of the present invention;
FIG 5 is a schematic flowchart of another transaction processing method according to an embodiment of the present invention;
FIG. 6 is a schematic flowchart of another transaction processing method according to an embodiment of the present invention;
FIG. 7 is a schematic flowchart of another transaction processing method according to an embodiment of the present invention;
FIG. 8 is a schematic flowchart of another transaction processing method according to an embodiment of the present invention;
FIG. 9 is a schematic flowchart of another transaction processing method according to an embodiment of the present invention;
FIG. 10A and FIG. 10B are a schematic flowchart of another transaction processing method according to an embodiment of the present invention;
FIG. 11A and FIG. 11B are a schematic flowchart of another transaction processing method according to an embodiment of the present invention;
FIG. 12A and FIG. 12B are a schematic flowchart of another transaction processing method according to an embodiment of the present invention;
FIG. 13A and FIG. 13B are a schematic flowchart of another transaction processing method according to an embodiment of the present invention;
FIG. 14A and FIG. 14B are a schematic flowchart of another transaction processing method according to an embodiment of the present invention;
FIG. 15 is a schematic flowchart of another transaction processing method according to an embodiment of the present invention;
FIG. 16 is a schematic structural diagram of a first terminal according to an embodiment of the present invention;
FIG. 17 is a schematic structural diagram of another first terminal according to an embodiment of the present invention; and
FIG. 18 is a schematic structural diagram of another first terminal according to an embodiment of the present invention.

### DESCRIPTION OF EMBODIMENTS

To resolve a problem of a money transfer request collision in near-field communication, in a transaction processing method provided in the embodiments of the present invention, after a first terminal receives a first money transfer request message sent by a second terminal, if the first terminal sends a second money transfer request message to the second terminal simultaneously when the first terminal receives the first money transfer request message, or the first terminal sends a second money transfer request message to the second terminal within a preset period before or after a moment at which the first terminal receives the first money transfer request message, the first terminal determines that the money transfer request collision exists, and then, the first terminal determines, based on a role flag of the second terminal and/or a role flag of the first terminal, a transaction initiator and that a money transfer request message sent by the transaction initiator is a request message for initiating a transaction, so that the first terminal sends a first money transfer response message to the second terminal, in response to the first money transfer request message sent by the second terminal, and the second terminal skips replying to the second money transfer request message sent by the first terminal, namely, the second terminal skips sending a second money transfer response message to the first terminal and ignores the second money transfer request message sent by the first terminal, or the first terminal skips replying to the first money transfer request message sent by the second terminal, namely, the first terminal skips sending a first money transfer response message to the second terminal and ignores the first money transfer request message sent by the second terminal, and the first terminal further receives or waits to receive a second money transfer response message sent by the second terminal, in response to the second money transfer request message sent by the first terminal. This effectively resolves the problem of the money transfer request collision in near-field communication.

The following describes implementations of the embodiments of the present invention in detail with reference to accompanying drawings.

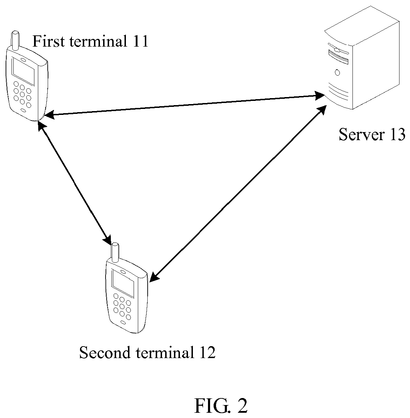

FIG. 2 is a simplified schematic diagram of a system architecture applicable to an embodiment of the present invention. As shown in FIG. 2, the system architecture may include a first terminal 11, a second terminal 12, and a server 13.

On the first terminal 11, applications having a payment function, for example, WeChat and Alipay, are installed. On the second terminal 12, applications having a payment function, for example, WeChat and Alipay, are also installed. If a user needs to use these applications having a payment function to perform a payment transaction, the user may tap an icon of the application having a payment function that is displayed on a screen of the first terminal 11, and after successfully logging in, tap a payment button or a payee button displayed on an interface of the application having a payment function, make the first terminal 11 approach or touch the second terminal 12, and send a money transfer request message to the second terminal 12. Likewise, the user may tap an icon of the application having a payment function that is displayed on a screen of the second terminal 12, and after successfully logging in, tap a payment button or a payee button displayed on an interface of the application having a payment function, make the second terminal 12 approach or touch the first terminal 11, and send a money transfer request message to the first terminal 11. The first terminal 11 and the second terminal 12 process the received money transfer request messages according to the transaction processing method described in the embodiments of the present invention, to complete the payment transaction. The transaction processing method described in the embodiments of the present invention is described in detail in later implementations of the embodiments of the present invention.

The server 13 is configured to process an MTR message sent by the first terminal 11 or the second terminal 12, and then send a transaction processing result to the first terminal 11 and the second terminal 12, to complete the transaction.

During specific implementation, the first terminal 11 and the second terminal 12 may be a desktop computer, a laptop computer, a tablet computer, a handheld computer, a mobile phone, a notebook computer, an ultra-mobile personal computer (Ultra-mobile Personal Computer, UMPC), a netbook, a cellular phone, a personal digital assistant (Personal Digital Assistant, PDA), a consumer electronic device, a wearable device, or the like.

In this embodiment of the present invention, an example in which the first terminal 11 and the second terminal 12 are mobile phones is used for description. The following describes components of the mobile phone in detail with reference to an accompanying drawing.

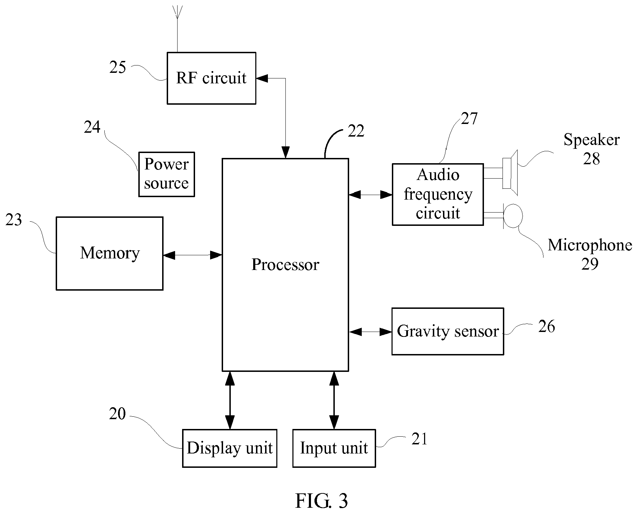

As shown in FIG. 3, the mobile phone may include components such as a display unit 20, an input unit 21, a processor 22, a memory 23, a power source 24, an RF circuit 25, a gravity sensor 26, an audio frequency circuit 27, a speaker 28, and a microphone 29. These components may be connected by using a bus, or may be connected directly. A person skilled in the art may understand that the mobile phone structure shown in FIG. 3 does not constitute any limitation on the mobile phone, and the mobile phone may include more components than those shown in the figure, or a combination of some components, or components disposed differently.

The display unit 20 is operatively connected to the processor 22, and is configured to receive a processing result returned by the processor 22 and display the processing result. For example, the display unit 20 may be configured to display an image collected by a camera and various menus of the mobile phone. A graphical user interface (Graphical User Interface, GUI) is usually configured on the display unit 20. The GUI is used to provide an easy-to-use interface between a user and an operating system running on the mobile phone. In this embodiment of the present invention, the display unit 20 is configured to display the icon of the application having a payment function.

The input unit 21 may be a single-point or multi-point input unit, and is operatively connected to the processor 22 and configured to receive an input operation of the user. The input unit 21 may be a touchpad or a touchscreen disposed above or in front of the display unit 20. The touchpad or the touchscreen may collect a touch operation performed by the user on or near the touchpad or the touchscreen (for example, an operation performed by the user on or near the touchscreen by using a finger or any appropriate object or accessory such as a stylus), and drive a corresponding connection apparatus according to a preset program. For example, the touchpad or the touchscreen may be implemented based on capacitive sensing, resistance sensing, surface acoustic wave sensing, pressure sensing, light sensing, and other sensing technologies. The touchpad or the touchscreen may be integrated with the display unit 20 or may be an independent component. In this embodiment of the present invention, the input unit 21 is configured to receive a tap operation of the user.

The processor 22 is a control center of the mobile phone, and connects various parts of the entire mobile phone by using various interfaces and lines. The processor 22 executes various functions of the mobile phone and processes data by running or executing a software program and/or a module stored in the memory 23, and calling data stored in the memory 23, so as to monitor the entire mobile phone. During specific implementation, in an embodiment, the processor 22 may include one or more processing units, and an application processor and a modem processor may be integrated into the processor 22. The application processor mainly processes the operating system, the GUI, the application program, and the like. The modem processor mainly processes wireless communication. It can be understood that the modem processor may alternatively be not integrated into the processor 22. In this embodiment of the present invention, the processor 22 is configured to determine validity of a money transfer request, and determine a valid initiator of a transaction.

The memory 23 may be configured to store data, the software program, and the module. The memory 23 may be a volatile memory (Volatile Memory), such as a random access memory (Random-Access Memory, RAM), may be a non-volatile memory (Non-Volatile Memory), such as a read-only memory (Read-Only Memory, ROM), a flash memory (Flash Memory), a hard disk (Hard Disk Drive, HDD), or a solid state drive (Solid-State Drive, SSD), or may be a combination of the foregoing types of memories. The memory 23 may alternatively be a removable storage medium, such as a secure digital (Secure Digital, SD) memory card. Specifically, the memory 23 may store program code, and the processor 22 executes the program code, to execute the transaction processing method provided in the embodiments of the present invention. In this embodiment of the present invention, the memory 23 may be configured to store account information that needs to be used in the transaction.

The power source 24 may be a battery, and is logically connected to the processor 22 by using a power management system, so that functions such as charging management, discharging management, and power consumption management are implemented by using the power management system.

The RF circuit 25 may be configured to receive and send information, or receive and send signals in a call process, and particularly, send received information to the processor 22 for processing, and send a signal generated by the processor 22. Generally, the RF circuit includes but is not limited to an antenna, at least one amplifier, a transceiver, a coupler, a low noise amplifier (Low Noise Amplifier, LNA), a duplexer, and the like. In addition, the RF circuit 25 may communicate with a network and another device through wireless communication. In this embodiment of the present invention, the RF circuit 25 may communicate with the server, to transmit the money transfer request message, obtain a transaction result, and the like.

The gravity sensor (Gravity Sensor) 26 may detect a magnitude of an acceleration of the mobile phone in each direction (usually three axes), and in a stationary state, may detect a magnitude and a direction of gravity, and may be used for applications for recognizing mobile phone postures (for example, switching between a landscape mode and a portrait mode, related games, and magnetometer posture calibration), vibration recognition-related functions (such as a pedometer and knocking), and the like. It should be noted that the mobile phone may further include other sensors, such as a pressure sensor, an optical sensor, a gyroscope, a barometer, a hygrometer, a thermometer, and an infrared sensor. Details are not described herein.

The audio frequency circuit 27, the speaker 28, and the microphone 29 may provide an audio interface between the user and the mobile phone. The audio frequency circuit 27 may transmit, to the speaker 28, an electrical signal transformed from received audio data, and the speaker 28 transforms the electrical signal into a sound signal for output. In addition, the microphone 29 transforms a collected sound signal into an electrical signal, and the audio frequency circuit 27 receives the electrical signal and transforms it into audio data, and then outputs the audio data to the RF circuit 25, so that the audio data is sent to, for example, another mobile phone, or the audio data is output to the processor 22 for further processing.

In addition, the operating system runs on the foregoing components. An application, such as WeChat or Alipay, may be installed and run on the operating system. Although not shown in the figure, the mobile phone may further include components such as a WiFi module, a Bluetooth module, and a camera. The WiFi module may be a module including a WiFi chip and a WiFi chip driver. The WiFi chip has a capability of running based on a wireless Internet standard protocol. The Bluetooth module is a printed circuit board assembly (Printed Circuit Board Assembly, PCBA) integrated with a Bluetooth function, and is used for short-range wireless communication.

The following describes in detail the transaction processing method provided in the embodiments of the present invention with reference to the accompanying drawings.

### Embodiment 1

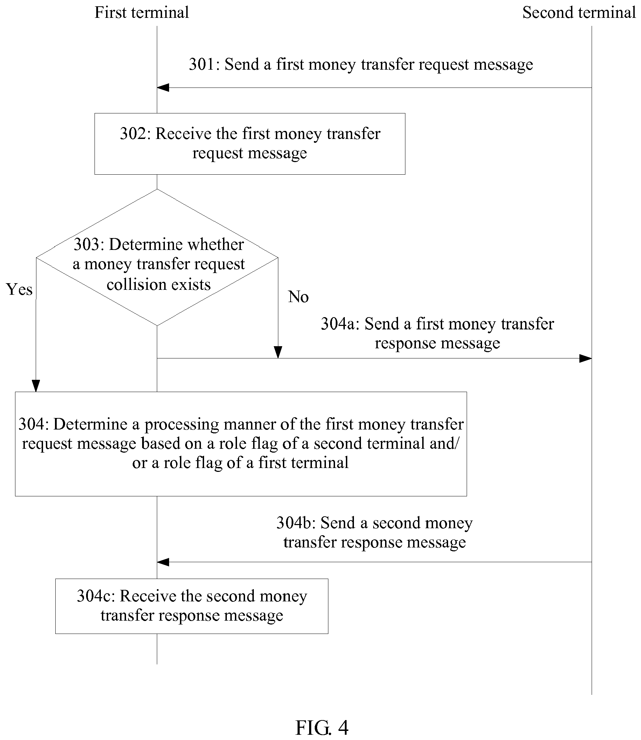

This embodiment of the present invention provides a transaction processing method. As shown in FIG. 4, the method includes the following steps.

Step 301: A second terminal sends a first money transfer request message to a first terminal.

The first money transfer request message is used to instruct the first terminal to provide account information that needs to be used in a transaction.

It should be noted that the first money transfer request message may further carry at least one set of money transfer information supported by the second terminal. Each set of money transfer information includes one or more of the following information: a payment application identifier, an account type identifier, and a payment account. The payment application identifier is used to uniquely identify an application that can be used for money transfer payment. The account type identifier is used to identify a type of a payment account, for example, a bank account type, a payment application account type, a Uniform Resource Locator (Uniform Resource Locator, URL) account type, or a pan-European (PAN-EUROPEAN) person-to-person (person-to-person, P2P) payment account type. The URL account type means that a form of the payment account is a URL, and by using a browser, the payment account can be logged in to and payment is completed. The pan-European P2P payment account type is a cross-border payment scheme being studied by the European Central Bank. The first money transfer request message is used to indicate, to the first terminal, money transfer information to be used by the second terminal in a current transaction, or used to negotiate with the first terminal about money transfer information that is to be used in a current transaction. A first money transfer response message may further carry at least one set of money transfer information supported by the first terminal, and each set of money transfer information carried in the first money transfer response message has a same payment application identifier and/or account type identifier as the at least one set of money transfer information in the first money transfer request message.

Step 302: The first terminal receives the first money transfer request message.

Step 303: The first terminal determines whether a money transfer request collision exists.

If the first terminal determines that the money transfer request collision exists, step 304 is performed. If the first terminal determines that the money transfer request collision does not exist, step 304a is performed.

The money transfer request collision means that the first terminal sends a second money transfer request message to the second terminal simultaneously when the first terminal receives the first money transfer request message, or the first terminal has sent a second money transfer request message to the second terminal within a preset period before a moment at which the first terminal receives the first money transfer request message. Particularly, the money transfer request collision may alternatively mean that the first terminal sends a second money transfer request message to the second terminal within a preset period after a moment at which the first terminal receives the first money transfer request message. For example, the preset period may be 0.5s. Assuming that the first terminal receives the first money transfer request message at a moment T, when the first terminal sends the second money transfer request message to the second terminal within 0.5s earlier or later than the moment T, the first terminal considers that a money transfer request collision exists. The second money transfer request message is used to instruct the second terminal to provide account information that needs to be used in a transaction.

The second money transfer request message may further carry the at least one set of money transfer information supported by the first terminal. Each set of money transfer information includes one or more of the following information: a payment application identifier, an account type identifier, and a payment account. The second money transfer request message is used to indicate, to the second terminal, money transfer information to be used by the first terminal in a current transaction, or used to negotiate with the first terminal about money transfer information that is to be used in a current transaction. A second money transfer response message may further carry at least one set of money transfer information supported by the second terminal, and each set of money transfer information carried in the second money transfer response message has a same payment application identifier and/or account type identifier as the at least one set of money transfer information in the second money transfer request message.

Step 304: The first terminal determines a processing manner of the first money transfer request message based on a role flag of the second terminal and/or a role flag of the first terminal.

It should be noted that the first money transfer request message includes the role flag of the second terminal, and the role flag of the second terminal is used to indicate whether a role of the second terminal is a payer or a payee when the first terminal and the second terminal perform a transaction. The second money transfer request message includes the role flag of the first terminal, and the role flag of the first terminal is used to indicate whether a role of the first terminal is a payer or a payee when the first terminal and the second terminal perform a transaction. The role flag may be preconfigured by a user or configured by a user before the money transfer request message is sent.

Specifically, the processing manner of the first money transfer request message described in step 304 is sending, by the first terminal, the first money transfer response message to the second terminal, or skipping, by the first terminal, replying to the first money transfer request message. A method of skipping, by the first terminal, replying to the first money transfer request message includes receiving or waiting to receive, by the first terminal, the second money transfer response message sent by the second terminal. Specifically, the following detailed steps are included.

Step 304a: The first terminal sends a first money transfer response message to the second terminal.

The first money transfer response message is used to reply to the first money transfer request message.

Step 304b: The second terminal sends a second money transfer response message to the first terminal.

Step 304c: The first terminal receives the second money transfer response message sent by the second terminal.

The second money transfer response message is used to reply to the second money transfer request message.

According to the transaction processing method provided in this embodiment of the present invention, after the first terminal receives the first money transfer request message sent by the second terminal, if the first terminal sends the second money transfer request message to the second terminal simultaneously when the first terminal receives the first money transfer request message, or the first terminal sends the second money transfer request message to the second terminal within the preset period before or after the moment at which the first terminal receives the first money transfer request message, the first terminal determines that the money transfer request collision exists, and then, the first terminal determines, based on the role flag of the second terminal and/or the role flag of the first terminal, a transaction initiator and that a money transfer request message sent by the transaction initiator is a request message for initiating a transaction, so that the first terminal sends the first money transfer response message to the second terminal, in response to the first money transfer request message sent by the second terminal, and the second terminal skips replying to the second money transfer request message sent by the first terminal, namely, the second terminal skips sending the second money transfer response message to the first terminal and ignores the second money transfer request message sent by the first terminal; or the first terminal skips replying to the first money transfer request message sent by the second terminal, namely, the first terminal skips sending the first money transfer response message to the second terminal and ignores the first money transfer request message sent by the second terminal, and the first terminal further receives or waits to receive the second money transfer response message sent by the second terminal, in response to the second money transfer request message sent by the first terminal. This effectively resolves a problem of a money transfer request collision in near-field communication.

The steps in the method shown in FIG. 4 may be specifically implemented by the mobile phone shown in FIG. 3. For example, step 301 of sending a first money transfer request message and step 302 of receiving the first money transfer request message may be implemented by the RF circuit 25. Step 303 of determining, by the first terminal, whether a money transfer request collision exists and step 304 may be implemented by the processor 22.

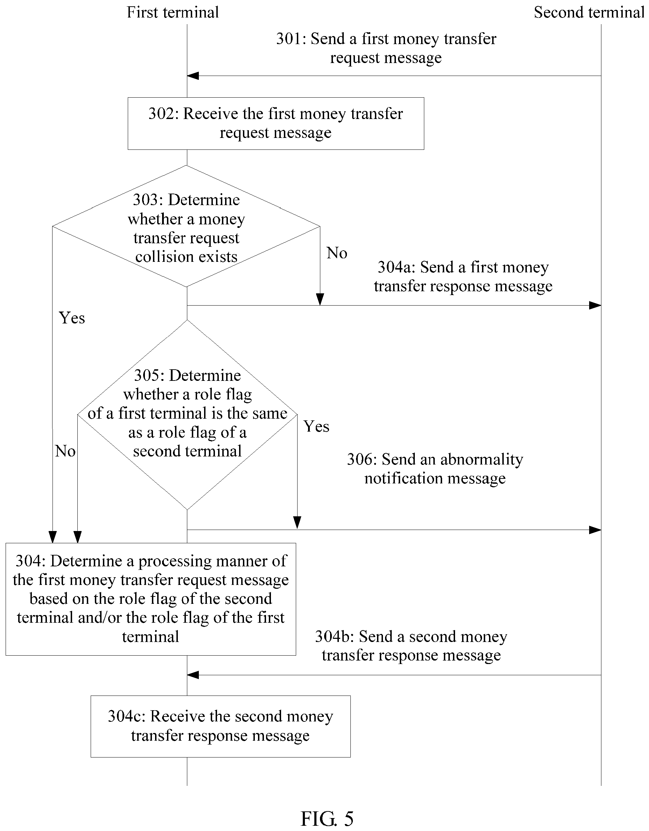

Further, based on FIG. 4, as shown in FIG 5, if the first terminal determines that the money transfer request collision exists, a method of determining, by the first terminal, a processing manner of the first money transfer request based on a role flag of the second terminal and/or a role flag of the first terminal specifically includes the following detailed steps.

Step 305: The first terminal determines whether the role flag of the first terminal is the same as the role flag of the second terminal.

If the role flag of the first terminal is different from the role flag of the second terminal, step 304 is performed.

If the role flag of the first terminal is the same as the role flag of the second terminal, step 306 is performed.

Step 306: The first terminal sends an abnormality notification message to the second terminal.

The abnormality notification message is used to indicate that there is an error in the current transaction. The abnormality notification message is, for example, information indicating whether the role flag of the first terminal is the same as the role flag of the second terminal.

Alternatively, the first terminal skips replying to the first money transfer request message. Alternatively, the first terminal skips replying to the first money transfer request message, and indicates that there is an error in the current transaction. For example, that there is an error in the current transaction is indicated by using, for example, a user interface (User Interface, UI) image and/or sound.

In this way, in a transaction process, if both parties of a transaction are payers or payees, a terminal may determine that a money transfer request message is an invalid message, and may indicate transaction error information to a user, so as to end the transaction and initiate a new transaction.

The steps in the method shown in FIG. 5 may be specifically implemented by the mobile phone shown in FIG. 3. For example, the method shown in step 305 may be implemented by the processor 22. That the first terminal indicates a transaction error may be implemented by the display unit 20.

It should be noted that from the prospective of transaction roles, a payer usually has more considerations than a payee when selecting a transaction manner. When the payer and the payee are both consumer accounts, it is more appropriate that the payer initiates a transaction.

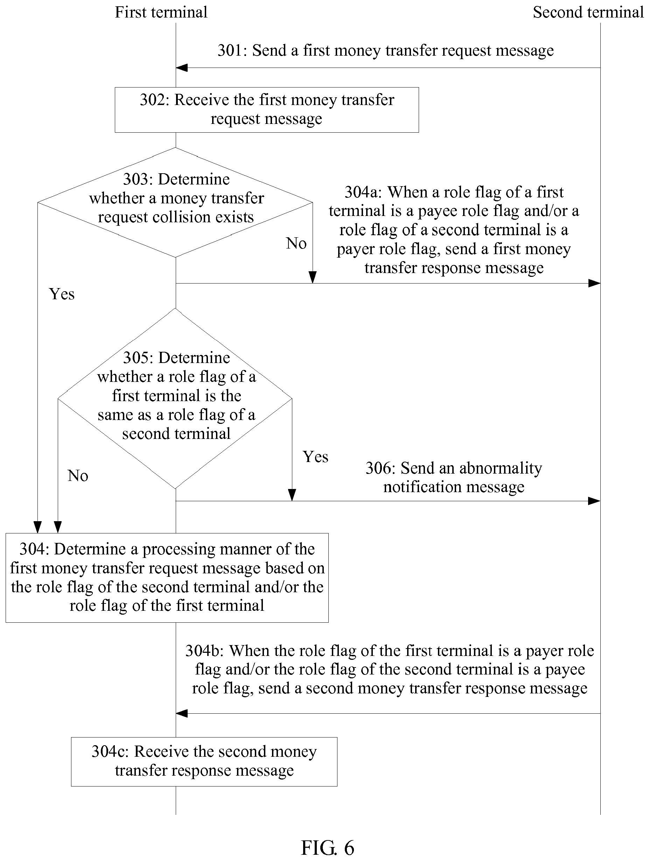

For example, based on FIG. 5, as shown in FIG. 6, when the first money transfer request message received by the first terminal does not include the role flag of the second terminal, the second money transfer request message sent by the first terminal to the second terminal includes the role flag of the first terminal, and the role flag of the first terminal is a payer, in other words, the first terminal only knows that the first terminal is a payer and does not know whether the second terminal is a payer or a payee, the first terminal may consider the second terminal as a payee by default, and the first terminal skips replying to the first money transfer request message based on the role flag of the first terminal, and receives or waits to receive the second money transfer response message sent by the second terminal. Namely, when the role flag of the first terminal is a payer role flag, step 304c is performed.

Alternatively, when the first money transfer request message received by the first terminal includes the role flag of the second terminal, the role flag of the second terminal is a payee, and the second money transfer request message sent by the first terminal to the second terminal does not include the role flag of the first terminal, in other words, the first terminal only knows that the second terminal is a payee and does not know whether the first terminal is a payer or a payee, the first terminal may consider the first terminal as a payer by default, and the first terminal skips replying to the first money transfer request message based on the role flag of the second terminal, and receives or waits to receive the second money transfer response message sent by the second terminal. Namely, when the role flag of the second terminal is a payee role flag, step 304c is performed.

Alternatively, when the first money transfer request message received by the first terminal includes the role flag of the second terminal, the role flag of the second terminal is a payee, the second money transfer request message sent by the first terminal to the second terminal includes the role flag of the first terminal, and the role flag of the first terminal is a payer, in other words, the first terminal knows that the first terminal is a payer and the second terminal is a payee, the first terminal skips replying to the first money transfer request message based on the role flag of the first terminal and the role flag of the second terminal, and receives or waits to receive the second money transfer response message sent by the second terminal. Namely, when the role flag of the first terminal is a payer role flag and the role flag of the second terminal is a payee role flag, step 304c is performed.

Therefore, the first terminal determines, based on that the role flag of the second terminal is a payee role flag and/or the role flag of the first terminal is a payer role flag, a transaction initiator and that a money transfer request message sent by the transaction initiator is a request message for initiating a transaction, so that the first terminal skips replying to the first money transfer request message sent by the second terminal, namely, the first terminal skips sending the first money transfer response message to the second terminal and ignores the first money transfer request message sent by the second terminal, and the first terminal further receives or waits to receive the second money transfer response message sent by the second terminal, in response to the second money transfer request message sent by the first terminal. This effectively resolves a problem of a money transfer request collision in near-field communication.

Similarly, when the first money transfer request message received by the first terminal does not include the role flag of the second terminal, the second money transfer request message sent by the first terminal to the second terminal includes the role flag of the first terminal, and the role flag of the first terminal is a payee, in other words, the first terminal only knows that the first terminal is a payee and does not know whether the second terminal is a payer or a payee, the first terminal may consider the second terminal as a payer by default, and the first terminal sends the first money transfer response message to the second terminal based on the role flag of the first terminal, and the second terminal skips replying to the second money transfer request message. Namely, when the role flag of the first terminal is a payee role flag, step 304a is performed.

Alternatively, when the first money transfer request message received by the first terminal includes the role flag of the second terminal, the role flag of the second terminal is a payer, and the second money transfer request message sent by the first terminal to the second terminal does not include the role flag of the first terminal, in other words, the first terminal only knows that the second terminal is a payer and does not know whether the first terminal is a payee or a payer, the first terminal may consider the first terminal as a payee by default, and the first terminal sends the first money transfer response message to the second terminal based on the role flag of the second terminal, and the second terminal skips replying to the second money transfer request message. Namely, when the role flag of the second terminal is a payer role flag, step 304a is performed.

Alternatively, when the first money transfer request message received by the first terminal includes the role flag of the second terminal, the role flag of the second terminal is a payer, and the second money transfer request message sent by the first terminal to the second terminal includes the role flag of the first terminal, and the role flag of the first terminal is a payee, in other words, the first terminal knows that the first terminal is a payee and the second terminal is a payer, the first terminal sends the first money transfer response message to the second terminal based on the role flag of the first terminal and the role flag of the second terminal, and the second terminal skips replying to the second money transfer request message. Namely, when the role flag of the first terminal is a payee role flag and the role flag of the second terminal is a payer role flag, step 304a is performed.

Therefore, the first terminal determines, based on that the role flag of the second terminal is a payer role flag and/or the role flag of the first terminal is a payee role flag, a transaction initiator and that a money transfer request message sent by the transaction initiator is a request message for initiating a transaction, so that the first terminal sends the first money transfer response message to the second terminal, in response to the first money transfer request message sent by the second terminal, and the second terminal skips replying to the second money transfer request message sent by the first terminal, namely, the second terminal skips sending the second money transfer response message to the first terminal and ignores the second money transfer request message sent by the first terminal. This effectively resolves a problem of a money transfer request collision in near-field communication.

The steps in the method shown in FIG. 6 may be specifically implemented by the mobile phone shown in FIG. 3. For example, step 304c of receiving the second money transfer response message and step 304a of sending a first money transfer response message may be implemented by the RF circuit 25.

Particularly, this embodiment of the present invention may further include: determining, by the first terminal, that a payee initiates a money transfer request. When the role flag of the first terminal is a payee, the first terminal receives the second money transfer response message sent by the second terminal. When the role flag of the second terminal is a payee, the second terminal receives the first money transfer response message sent by the first terminal.

It should be noted that from the prospective of a payment account attribute, a mobile transaction scenario includes two categories: user-to-user transactions and user-to-merchant transactions. The payee may be a highly regulated account such as a merchant account or an ordinary account such as a personal account. When the payee is a merchant account, initiating a transaction by the payee can reduce energy consumption of the terminal.

In another specific implementation of this embodiment of the present invention, the money transfer request message may further include a payment account attribute, and the payment account attribute may be a merchant account or a personal account.

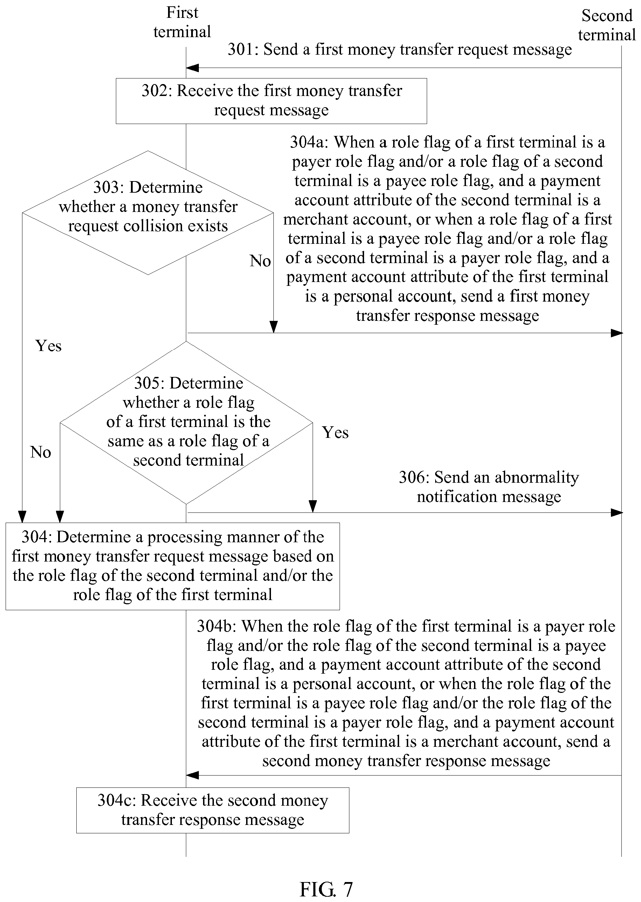

For example, the first money transfer request message further includes a payment account attribute of the second terminal, and the second money transfer request message further includes a payment account attribute of the first terminal. Based on FIG. 5, as shown in FIG. 7, when the first money transfer request message received by the first terminal does not include the role flag of the second terminal, the second money transfer request message sent by the first terminal to the second terminal includes the role flag of the first terminal, and the role flag of the first terminal is a payer, in other words, the first terminal only knows that the first terminal is a payer and does not know whether the second terminal is a payer or a payee, the first terminal may consider the second terminal as a payee by default. The first money transfer request message includes the payment account attribute of the second terminal, and the payment account attribute of the second terminal is a personal account. The first terminal may skip replying to the first money transfer request message based on the role flag of the first terminal, and receive or wait to receive the second money transfer response message sent by the second terminal. Namely, when the role flag of the first terminal is a payer role flag, step 304c is performed.

Alternatively, when the first money transfer request message received by the first terminal includes the role flag of the second terminal and the payment account attribute of the second terminal, the role flag of the second terminal is a payee, the payment account attribute of the second terminal is a personal account, and the second money transfer request message sent by the first terminal to the second terminal does not include the role flag of the first terminal, in other words, the first terminal only knows that the second terminal is a payee and does not know whether the first terminal is a payee or a payer, the first terminal may consider the first terminal as a payer by default, and the first terminal skips replying to the first money transfer request message based on the role flag of the second terminal, and receives or waits to receive the second money transfer response message sent by the second terminal. Namely, when the role flag of the second terminal is a payee role flag, step 304c is performed.

Alternatively, when the first money transfer request message received by the first terminal includes the role flag of the second terminal, the role flag of the second terminal is a payee, the second money transfer request message sent by the first terminal to the second terminal includes the role flag of the first terminal, and the role flag of the first terminal is a payer, in other words, the first terminal knows that the first terminal is a payer and the second terminal is a payee; and the first money transfer request message includes the payment account attribute of the second terminal and the payment account attribute of the second terminal is a personal account, the first terminal skips replying to the first money transfer request message based on the role flag of the first terminal and the role flag of the second terminal, and receives or waits to receive the second money transfer response message sent by the second terminal. Namely, when the role flag of the first terminal is a payer role flag and the role flag of the second terminal is a payee role flag, step 304c is performed.

Therefore, the first terminal determines, based on that the role flag of the second terminal is a payee role flag and/or the role flag of the first terminal is a payer role flag and that the payment account attribute of the second terminal is a personal account, a transaction initiator and that a money transfer request message sent by the transaction initiator is a request message for initiating a transaction, so that the first terminal skips replying to the first money transfer request message sent by the second terminal, namely, the first terminal skips sending the first money transfer response message to the second terminal and ignores the first money transfer request message sent by the second terminal, and the first terminal further receives or waits to receive the second money transfer response message sent by the second terminal, in response to the second money transfer request message sent by the first terminal. This effectively resolves a problem of a money transfer request collision in near-field communication.

Similarly, when the first money transfer request message received by the first terminal does not include the role flag of the second terminal, the second money transfer request message sent by the first terminal to the second terminal includes the role flag of the first terminal, and the role flag of the first terminal is a payee, in other words, the first terminal only knows that the first terminal is a payee and does not know whether the second terminal is a payer or a payee, the first terminal may consider the second terminal as a payer by default, and the first terminal may send the first money transfer response message to the second terminal based on the role flag of the first terminal, and the second terminal skips replying to the second money transfer request message. But because the payment account attribute of the first terminal is a merchant account, the first terminal should be used as a transaction initiator, and the first terminal skips replying to the first money transfer request message based on the role flag of the first terminal and the role flag of the second terminal, and receives or waits to receive the second money transfer response message sent by the second terminal. Namely, when the role flag of the first terminal is a payee role flag, and the payment account attribute of the first terminal is a merchant account, step 304c is performed.

Alternatively, when the first money transfer request message received by the first terminal includes the role flag of the second terminal, the role flag of the second terminal is a payer, and the second money transfer request message sent by the first terminal to the second terminal does not include the role flag of the first terminal, in other words, the first terminal only knows that the second terminal is a payer and does not know whether the first terminal is a payee or a payer, the first terminal may consider the first terminal as a payee by default, the first terminal may send the first money transfer response message to the second terminal based on the role flag of the second terminal, and the second terminal skips replying to the second money transfer request message. But because the payment account attribute of the first terminal is a merchant account, the first terminal should be used as a transaction initiator, and the first terminal skips replying to the first money transfer request message based on the role flag of the first terminal and the role flag of the second terminal, and receives or waits to receive the second money transfer response message sent by the second terminal. Namely, when the role flag of the second terminal is a payer role flag, and the payment account attribute of the first terminal is a merchant account, step 304c is performed.

Alternatively, when the first money transfer request message received by the first terminal includes the role flag of the second terminal, the role flag of the second terminal is a payer, the second money transfer request message sent by the first terminal to the second terminal includes the role flag of the first terminal, and the role flag of the first terminal is a payee, in other words, the first terminal knows that the first terminal is a payee and the second terminal is a payer, the first terminal sends the first money transfer response message to the second terminal based on the role flag of the first terminal and the role flag of the second terminal, and the second terminal skips replying to the second money transfer request message. But because the payment account attribute of the first terminal is a merchant account, the first terminal should be used as a transaction initiator, and the first terminal skips replying to the first money transfer request message based on the role flag of the first terminal and the role flag of the second terminal, and receives or waits to receive the second money transfer response message sent by the second terminal. Namely, when the role flag of the first terminal is a payee role flag and the role flag of the second terminal is a payer role flag, and the payment account attribute of the first terminal is a merchant account, step 304c is performed.

Therefore, the first terminal determines, based on that the role flag of the second terminal is a payer role flag and/or the role flag of the first terminal is a payee role flag and that the payment account attribute of the first terminal is a merchant account, a transaction initiator and that a money transfer request message sent by the transaction initiator is a request message for initiating a transaction, so that the first terminal sends the first money transfer response message to the second terminal, in response to the first money transfer request message sent by the second terminal, and the second terminal skips replying to the second money transfer request message sent by the first terminal, namely, the second terminal skips sending the second money transfer response message to the first terminal and ignores the second money transfer request message sent by the first terminal. This effectively resolves a problem of a money transfer request collision in near-field communication.

Similarly, when the role flag of the first terminal is a payer role flag and/or the role flag of the second terminal is a payee role flag, and the payment account attribute of the second terminal is a merchant account, the first terminal sends the first money transfer response message to the second terminal, and the second terminal skips replying to the second money transfer request message. Step 304a is performed.

Therefore, the first terminal determines, based on that the role flag of the second terminal is a payer role flag and/or the role flag of the first terminal is a payee role flag and that the payment account attribute of the second terminal is a merchant account, a transaction initiator and that a money transfer request message sent by the transaction initiator is a request message for initiating a transaction, so that the first terminal sends the first money transfer response message to the second terminal, in response to the first money transfer request message sent by the second terminal, and the second terminal skips replying to the second money transfer request message sent by the first terminal, namely, the second terminal skips sending the second money transfer response message to the first terminal and ignores the second money transfer request message sent by the first terminal. This effectively resolves a problem of a money transfer request collision in near-field communication.

When the role flag of the first terminal is a payee role flag and/or the role flag of the second terminal is a payer role flag, and the payment account attribute of the first terminal is a personal account, the first terminal sends the first money transfer response message to the second terminal, and the second terminal skips replying to the second money transfer request message. Step 304a is performed.

Therefore, the first terminal determines, based on that the role flag of the second terminal is a payer role flag and/or the role flag of the first terminal is a payee role flag and that the payment account attribute of the first terminal is a personal account, a transaction initiator and that a money transfer request message sent by the transaction initiator is a request message for initiating a transaction, so that the first terminal sends the first money transfer response message to the second terminal, in response to the first money transfer request message sent by the second terminal, and the second terminal skips replying to the second money transfer request message sent by the first terminal, namely, the second terminal skips sending the second money transfer response message to the first terminal and ignores the second money transfer request message sent by the first terminal. This effectively resolves a problem of a money transfer request collision in near-field communication.

It should be noted that the second terminal may process the received second money transfer request message and the first money transfer request message with reference to a method for processing the first money transfer request message and the second money transfer request message by the first terminal.

### Embodiment 2

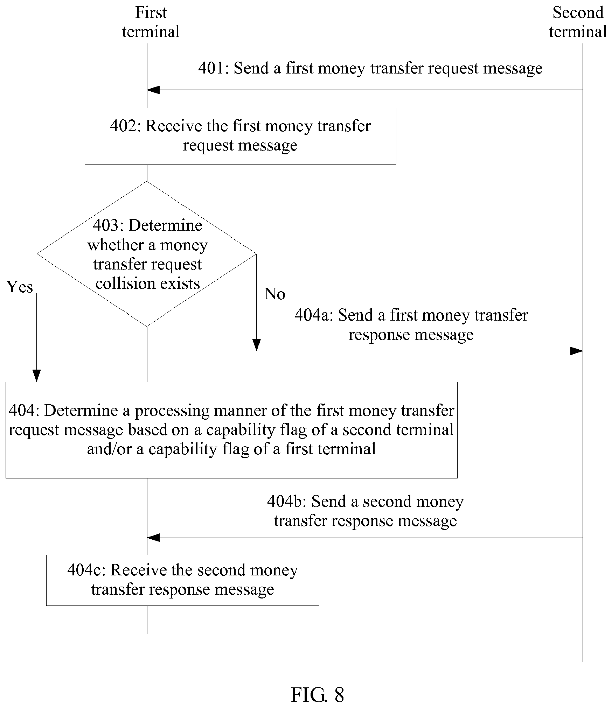

This embodiment of the present invention provides a transaction processing method. As shown in FIG. 8, the method includes the following steps.

Step 401: A second terminal sends a first money transfer request message to a first terminal.

The first money transfer request message includes a capability flag of the second terminal. The capability flag of the second terminal is used to indicate whether the second terminal is capable of submitting a transaction processing request to a transaction server.

For example, a capability flag of a terminal may be a network connection status of the terminal. To be specific, when the terminal has a network capability of connecting to the Internet or a transaction server, the capability flag of the terminal indicates that the terminal is capable of submitting a transaction processing request to the transaction server; otherwise, the capability flag of the terminal indicates that the terminal is incapable of submitting a transaction processing request to the transaction server. In addition, the capability flag of the terminal may be further determined based on the network connection status of the terminal, and user settings or a policy of a transaction system. For example, when the terminal has the network capability of connecting to the Internet or the transaction server, but a user sets that the terminal does not submit a transaction processing request to the transaction server, or the transaction system forbids the terminal, used as a payee of a transaction, from submitting a transaction processing request to the transaction server, the capability flag of the terminal indicates that the transaction processing request is not allowed to be submitted to the transaction server. The transaction processing request is used to request the transaction server to perform transaction processing.

Step 402: The first terminal receives the first money transfer request message.

Step 403: The first terminal determines whether a money transfer request collision exists.

If the first terminal determines that the money transfer request collision exists, step 404 is performed. If the first terminal determines that the money transfer request collision does not exist, step 404a is performed.

The money transfer request collision means that the first terminal sends a second money transfer request message to the second terminal simultaneously when the first terminal receives the first money transfer request message, or the first terminal has sent a second money transfer request message to the second terminal within a preset period before a moment at which the first terminal receives the first money transfer request message. Particularly, the money transfer request collision may alternatively mean that the first terminal sends a second money transfer request message to the second terminal within a preset period after a moment at which the first terminal receives the first money transfer request message. For example, the preset period may be 0.5s. Assuming that the first terminal receives the first money transfer request message at a moment T, when the first terminal sends the second money transfer request message to the second terminal within 0.5s earlier or later than the moment T, the first terminal considers that a money transfer request collision exists. The second money transfer request message is used to instruct the second terminal to provide account information that needs to be used in a transaction. The second money transfer request message includes a capability flag of the first terminal. The capability flag of the first terminal is used to indicate whether the first terminal is capable of submitting a transaction processing request to the transaction server.

Step 404: The first terminal determines a processing manner of the first money transfer request message based on a capability flag of the second terminal and a capability flag of the first terminal.

Specifically, the processing manner of the first money transfer request message described in step 404 is sending, by the first terminal, a first money transfer response message to the second terminal, or skipping, by the first terminal, replying to the first money transfer request message. A method of skipping, by the first terminal, replying to the first money transfer request message includes receiving or waiting to receive, by the first terminal, a second money transfer response message sent by the second terminal. Specifically, the following detailed steps are included.

Step 404a: The first terminal sends a first money transfer response message to the second terminal.

The first money transfer response message is used to reply to the first money transfer request message.

Step 404b: The second terminal sends a second money transfer response message to the first terminal.

Step 404c: The first terminal receives the second money transfer response message sent by the second terminal.

The second money transfer response message is used to reply to the second money transfer request message.

According to the transaction processing method provided in this embodiment of the present invention, after receiving the first money transfer request message sent by the second terminal, the first terminal determines that the money transfer request collision exists, and then, the first terminal determines, based on the capability flag of the second terminal and/or the capability flag of the first terminal, a terminal capable of submitting a transaction processing request to the transaction server as a transaction initiator and that a money transfer request message sent by the transaction initiator is a request message for initiating a transaction, so that the first terminal sends the first money transfer response message to the second terminal, in response to the first money transfer request message sent by the second terminal, and the second terminal skips replying to the second money transfer request message sent by the first terminal, namely, the second terminal skips sending the second money transfer response message to the first terminal and ignores the second money transfer request message sent by the first terminal; or the first terminal skips replying to the first money transfer request message sent by the second terminal, namely, the first terminal skips sending the first money transfer response message to the second terminal and ignores the first money transfer request message sent by the second terminal, and further waits for the second money transfer response message sent by the second terminal, in response to the second money transfer request message sent by the first terminal. This effectively resolves a problem of a money transfer request collision in near-field communication.

The steps in the method shown in FIG. 8 may be specifically implemented by the mobile phone shown in FIG. 3. For example, step 401 of sending a first money transfer request message and step 402 of receiving the first money transfer request message may be implemented by the RF circuit 25. Step 403 of determining, by the first terminal, whether a money transfer request collision exists and step 404 may be implemented by the processor 22.

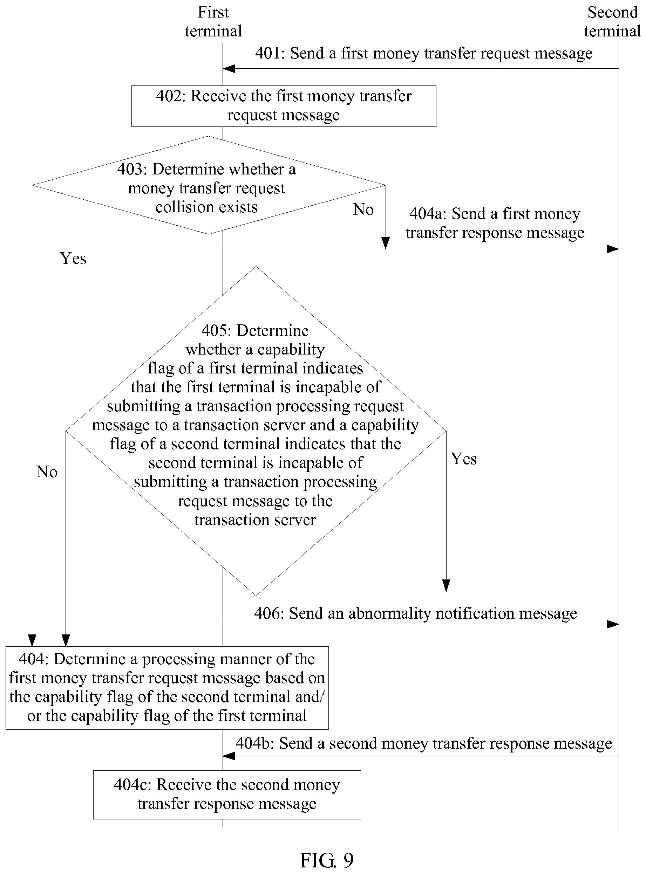

Further, based on FIG. 8, as shown in FIG 9, if the first terminal determines that the money transfer request collision exists, a method of determining, by the first terminal, a processing manner of the first money transfer request based on a capability flag of the second terminal and/or a capability flag of the first terminal specifically includes the following detailed steps.

Step 405: The first terminal determines whether the capability flag of the first terminal indicates that the first terminal is incapable of submitting a transaction processing request to a transaction server and the capability flag of the second terminal indicates that the second terminal is incapable of submitting a transaction processing request to the transaction server.

If no, step 404 is performed. If yes, step 406 is performed.

Step 406: The first terminal sends an abnormality notification message to the second terminal.

The abnormality notification message is used to indicate that there is an error in the current transaction.

Alternatively, the first terminal skips replying to the first money transfer request message. Alternatively, the first terminal skips replying to the first money transfer request message, and indicates that there is an error in the current transaction. For example, that there is an error in the current transaction is indicated by using, for example, a user interface (User Interface, UI) image and/or sound.

The steps in the method shown in FIG. 9 may be specifically implemented by the mobile phone shown in FIG. 3. For example, the method shown in step 405 may be implemented by the processor 22. That the first terminal indicates a transaction error may be implemented by the display unit 20.

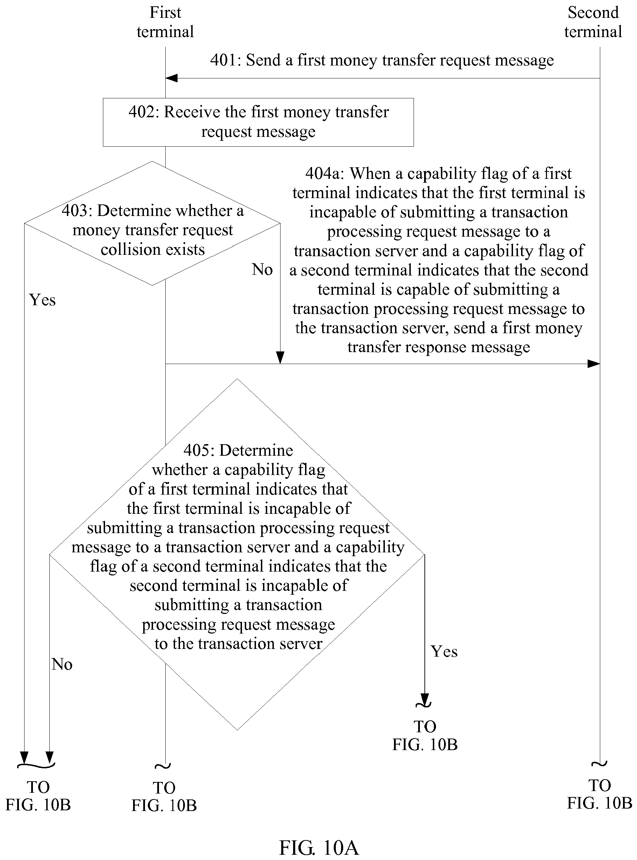

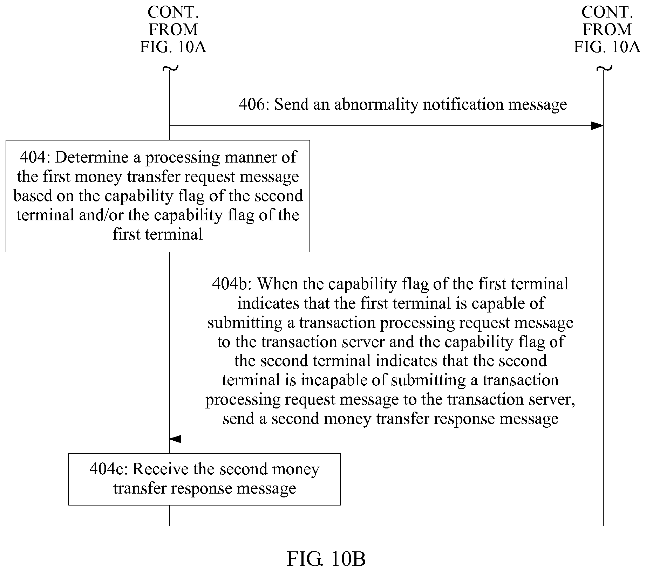

Specifically, based on FIG. 9, as shown in FIG. 10A and FIG. 10B, the sending, by the first terminal, a first money transfer response message to the second terminal includes: when the capability flag of the first terminal indicates that the first terminal is incapable of submitting a transaction processing request to the transaction server and the capability flag of the second terminal indicates that the second terminal is capable of submitting a transaction processing request to the transaction server, sending, by the first terminal incapable of submitting a transaction processing request to the transaction server, the first money transfer response message to the second terminal capable of submitting a transaction processing request to the transaction server, to inform the second terminal that the first terminal is incapable of submitting a transaction processing request to the transaction server. In this case, the second terminal capable of submitting a transaction processing request to the transaction server is used as a transaction initiator, the second terminal skips replying to the second money transfer request message, and step 404a is performed.

The skipping, by the first terminal, replying to the first money transfer request message includes: when the capability flag of the first terminal indicates that the first terminal is capable of submitting a transaction processing request to the transaction server and the capability flag of the second terminal indicates that the second terminal is incapable of submitting a transaction processing request to the transaction server, sending, by the second terminal incapable of submitting a transaction processing request to the transaction server, the second money transfer response message to the first terminal capable of submitting a transaction processing request to the transaction server, to inform the first terminal that the second terminal is incapable of submitting a transaction processing request to the transaction server. In this case, the first terminal capable of submitting a transaction processing request to the transaction server is used as a transaction initiator, the first terminal skips replying to the first money transfer request message, and step 404c is performed.

According to the transaction processing method provided in this embodiment of the present invention, after receiving the first money transfer request message sent by the second terminal, the first terminal determines that the money transfer request collision exists, and then, the first terminal determines, based on the capability flag of the second terminal and the capability flag of the first terminal, a terminal capable of submitting a transaction processing request to the transaction server as a transaction initiator and that a money transfer request message sent by the transaction initiator is a request message for initiating a transaction, so that the first terminal sends the first money transfer response message to the second terminal, in response to the first money transfer request message sent by the second terminal, and the second terminal skips replying to the second money transfer request message sent by the first terminal, namely, the second terminal skips sending the second money transfer response message to the first terminal and ignores the second money transfer request message sent by the first terminal; or the first terminal skips replying to the first money transfer request message sent by the second terminal, namely, the first terminal skips sending the first money transfer response message to the second terminal and ignores the first money transfer request message sent by the second terminal, and further waits for the second money transfer response message sent by the second terminal, in response to the second money transfer request message sent by the first terminal. This effectively resolves a problem of a money transfer request collision in near-field communication.

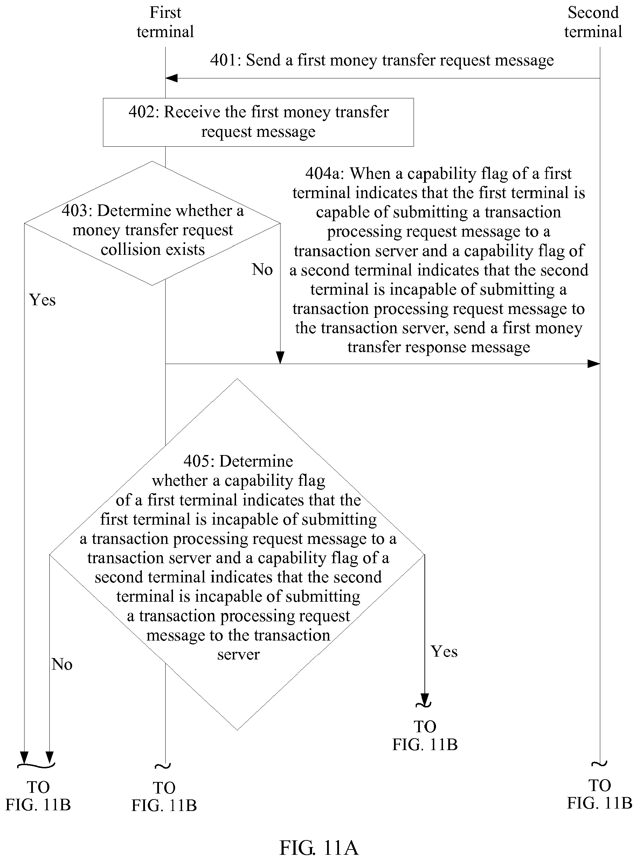

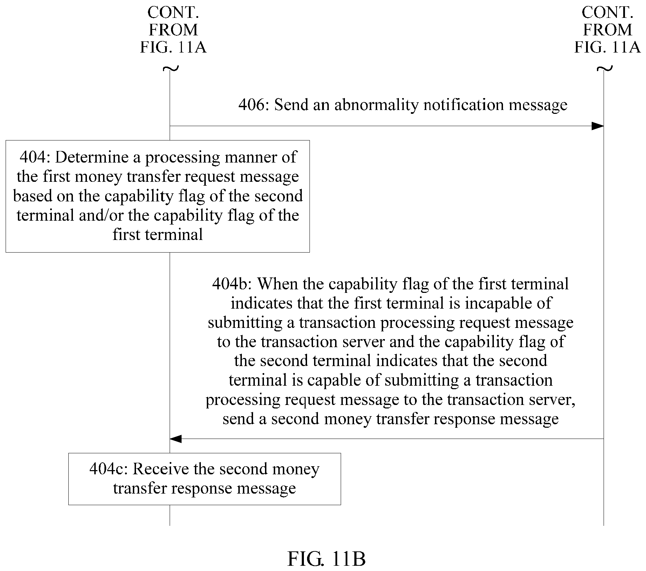

Specifically, based on FIG. 9, as shown in FIG. 11A and FIG. 11B, the sending, by the first terminal, a first money transfer response message to the second terminal includes: when the capability flag of the first terminal indicates that the first terminal is capable of submitting a transaction processing request to the transaction server and the capability flag of the second terminal indicates that the second terminal is incapable of submitting a transaction processing request to the transaction server, sending, by the first terminal capable of submitting a transaction processing request to the transaction server, the first money transfer response message to the second terminal incapable of submitting a transaction processing request to the transaction server, to inform the second terminal that the first terminal is capable of submitting a transaction processing request to the transaction server. In this case, the first terminal capable of submitting a transaction processing request to the transaction server is used as a transaction initiator, the second terminal skips replying to the second money transfer request message, and step 404a is performed.

The skipping, by the first terminal, replying to the first money transfer request message includes: when the capability flag of the first terminal indicates that the first terminal is incapable of submitting a transaction processing request to the transaction server and the capability flag of the second terminal indicates that the second terminal is capable of submitting a transaction processing request to the transaction server, sending, by the second terminal capable of submitting a transaction processing request to the transaction server, the second money transfer response message to the first terminal incapable of submitting a transaction processing request to the transaction server, to inform the first terminal that the second terminal is capable of submitting a transaction processing request to the transaction server. In this case, the second terminal capable of submitting a transaction processing request to the transaction server is used as a transaction initiator, the first terminal skips replying to the first money transfer request message, and step 404c is performed.

According to the transaction processing method provided in this embodiment of the present invention, after receiving the first money transfer request message sent by the second terminal, the first terminal determines that the money transfer request collision exists, and then, the first terminal determines, based on the capability flag of the second terminal and the capability flag of the first terminal, a terminal capable of submitting a transaction processing request to the transaction server as a transaction initiator and that a money transfer request message sent by the transaction initiator is a request message for initiating a transaction, so that the first terminal sends the first money transfer response message to the second terminal, in response to the first money transfer request message sent by the second terminal, and the second terminal skips replying to the second money transfer request message sent by the first terminal, namely, the second terminal skips sending the second money transfer response message to the first terminal and ignores the second money transfer request message sent by the first terminal; or the first terminal skips replying to the first money transfer request message sent by the second terminal, namely, the first terminal skips sending the first money transfer response message to the second terminal and ignores the first money transfer request message sent by the second terminal, and further waits for the second money transfer response message sent by the second terminal, in response to the second money transfer request message sent by the first terminal. This effectively resolves a problem of a money transfer request collision in near-field communication.

It should be noted that when the first terminal determines the processing manner of the first money transfer request message based on the capability flag of the first terminal or the capability flag of the second terminal, the first terminal may determine a transaction initiator with reference to roles of the terminals in the transaction. From the prospective of transaction roles, a payer usually has more considerations than a payee when selecting a transaction manner. When the payer and the payee are both consumer accounts, it is more appropriate that the payer initiates a transaction.

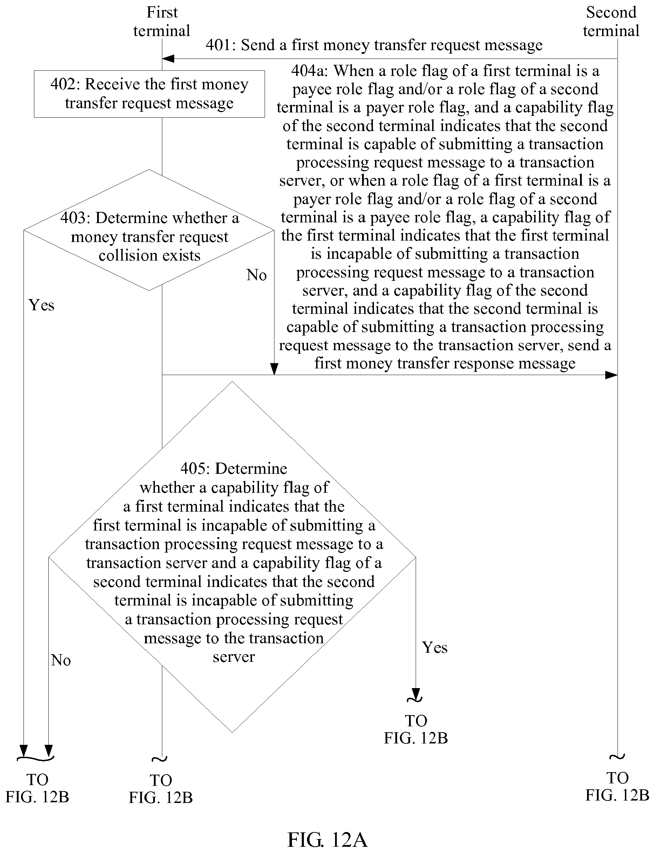

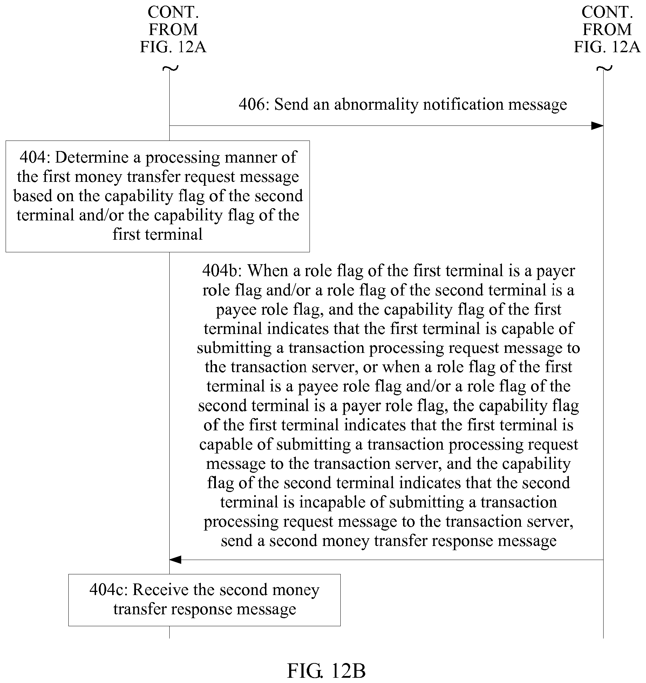

Specifically, based on FIG. 9, as shown in FIG. 12A and FIG. 12B, the first money transfer request message further includes a role flag of the second terminal, the role flag of the second terminal is a payer role flag or a payee role flag, the second money transfer request message further includes a role flag of the first terminal, and the role flag of the first terminal is a payer role flag or a payee role flag.

The sending, by the first terminal, a first money transfer response message to the second terminal includes: when the role flag of the first terminal is a payee role flag and/or the role flag of the second terminal is a payer role flag, and the capability flag of the second terminal indicates that the second terminal is capable of submitting a transaction processing request to the transaction server, if a payer capable of submitting a transaction processing request to the transaction server, namely, the second terminal, is used as a transaction initiator, sending, by the first terminal, the first money transfer response message to the second terminal and skipping, by the second terminal, replying to the second money transfer request message. Namely, step 404a is performed.

Alternatively, when the role flag of the first terminal is a payer role flag and/or the role flag of the second terminal is a payee role flag, the capability flag of the first terminal indicates that the first terminal is incapable of submitting a transaction processing request to the transaction server, and the capability flag of the second terminal indicates that the second terminal is capable of submitting a transaction processing request to the transaction server, if a payer is incapable of submitting a transaction processing request to the transaction server, and a payee capable of submitting a transaction processing request to the transaction server, namely, the second terminal, is used as a transaction initiator, the first terminal sends the first money transfer response message to the second terminal, and the second terminal skips replying to the second money transfer request message. Namely, step 404a is performed.

The first terminal is possibly not within a coverage area of an available signal and cannot be connected to the transaction server. In this case, the first terminal may use the capability flag of the first terminal to indicate that the first terminal is incapable of submitting a transaction processing request to the transaction server. The second terminal is possibly within the coverage area of the available signal and can be connected to the transaction server. In this case, the second terminal may use the capability flag of the second terminal to indicate that the second terminal is capable of submitting a transaction processing request to the transaction server. Therefore, the first terminal determines the second terminal as a transaction initiator. The second money transfer response message may further include account information of the second terminal and the like.

The first terminal is possibly within a coverage area of an available signal and can be connected to the transaction server. In this case, the first terminal may use the capability flag of the first terminal to indicate that the first terminal is capable of submitting a transaction processing request to the transaction server. The second terminal is possibly not within the coverage area of the available signal and cannot be connected to the transaction server. In this case, the second terminal may use the capability flag of the second terminal to indicate that the second terminal is incapable of submitting a transaction processing request to the transaction server. Therefore, the first terminal determines the first terminal as a transaction initiator. The first money transfer response message may further include account information of the first terminal and the like.

According to the transaction processing method provided in this embodiment of the present invention, after receiving the first money transfer request message sent by the second terminal, the first terminal determines that the money transfer request collision exists, and then, the first terminal determines a payer capable of submitting a transaction processing request to the transaction server as a transaction initiator, or determines a payee capable of submitting a transaction processing request to the transaction server as a transaction initiator when a payer is incapable of submitting a transaction processing request to the transaction server, so that the first terminal sends the first money transfer response message to the second terminal, in response to the first money transfer request message sent by the second terminal, and the second terminal skips replying to the second money transfer request message sent by the first terminal, namely, the second terminal skips sending the second money transfer response message to the first terminal and ignores the second money transfer request message sent by the first terminal. This effectively resolves a problem of a money transfer request collision in near-field communication.

The first money transfer request message further includes a role flag of the second terminal, the role flag of the second terminal is a payer role flag or a payee role flag, the second money transfer request message further includes a role flag of the first terminal, and the role flag of the first terminal is a payer role flag or a payee role flag.

The skipping, by the first terminal, replying to the first money transfer request message includes:
when the role flag of the first terminal is a payer role flag and/or the role flag of the second terminal is a payee role flag, and the capability flag of the first terminal indicates that the first terminal is capable of submitting a transaction processing request to the transaction server, skipping, by the first terminal, replying to the first money transfer request message, namely, performing step 404c; or
when the role flag of the first terminal is a payee role flag and/or the role flag of the second terminal is a payer role flag, the capability flag of the first terminal indicates that the first terminal is capable of submitting a transaction processing request to the transaction server, and the capability flag of the second terminal indicates that the second terminal is incapable of submitting a transaction processing request to the transaction server, skipping, by the first terminal, replying to the first money transfer request message, namely, performing step 404c.

According to the transaction processing method provided in this embodiment of the present invention, after receiving the first money transfer request message sent by the second terminal, the first terminal determines that the money transfer request collision exists, and then, the first terminal determines a payer capable of submitting a transaction processing request to the transaction server as a transaction initiator, or determines a payee capable of submitting a transaction processing request to the transaction server as a transaction initiator when a payer is incapable of submitting a transaction processing request to the transaction server, so that the first terminal skips replying to the first money transfer request message sent by the second terminal, namely, the first terminal skips sending the first money transfer response message to the second terminal and ignores the first money transfer request message sent by the second terminal, and further waits for the second money transfer response message sent by the second terminal, in response to the second money transfer request message sent by the first terminal. This effectively resolves a problem of a money transfer request collision in near-field communication.

It should be noted that when the first terminal determines the processing manner of the first money transfer request message based on the capability flag of the first terminal or the capability flag of the second terminal, the first terminal may determine a transaction initiator with reference to roles of the terminals in the transaction and payment account attributes of the terminals. From the prospective of transaction roles, a payer usually has more considerations than a payee when selecting a transaction manner. When the payer and the payee are both consumer accounts, it is more appropriate that the payer initiates a transaction. If the payee may be a highly regulated account such as a merchant account or an ordinary account such as a personal account, when the payee is a merchant account, initiating a transaction by the payee can reduce energy consumption of the terminal.

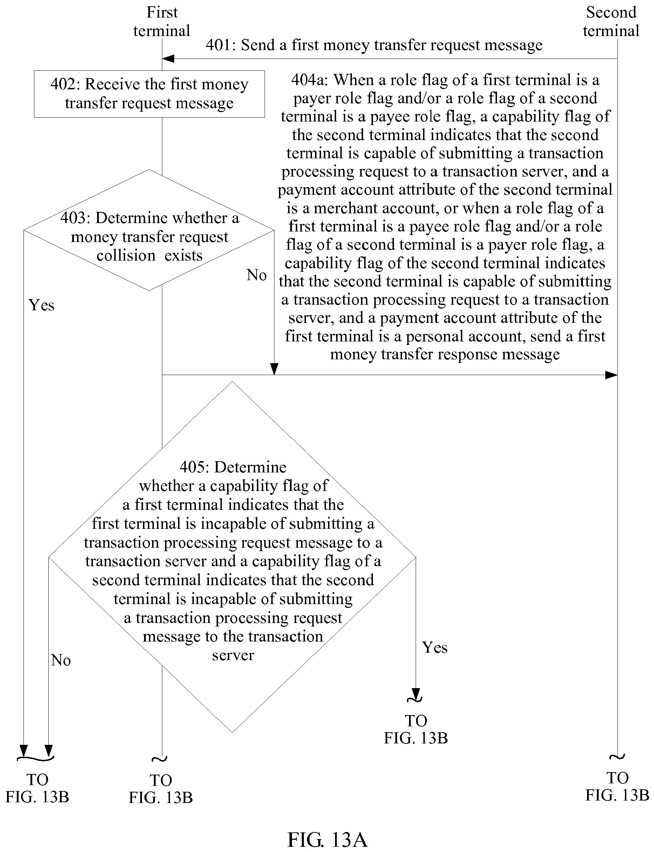

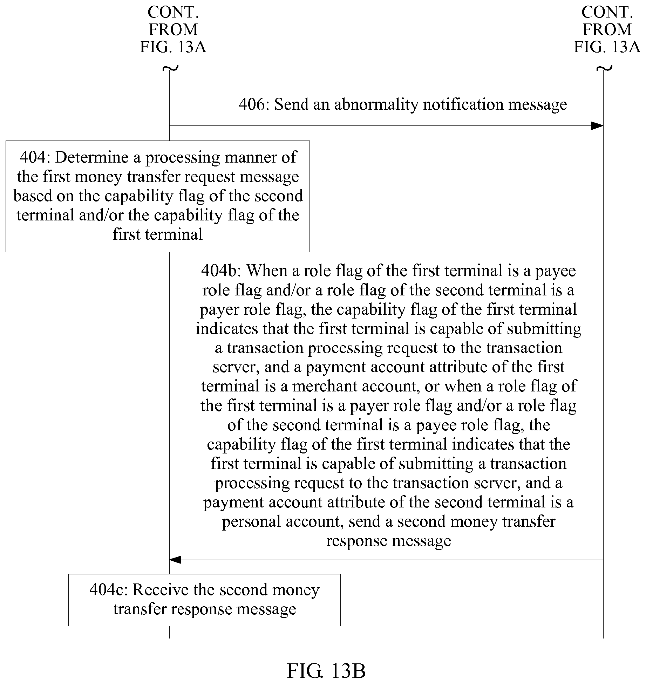

Specifically, based on FIG. 9, as shown in FIG. 13A and FIG. 13B, the first money transfer request message further includes a role flag of the second terminal and a payment account attribute of the second terminal, the role flag of the second terminal is a payer role flag or a payee role flag, the second request message further includes a role flag of the first terminal and a payment account attribute of the first terminal, and the role flag of the first terminal is a payer role flag or a payee role flag.

The sending, by the first terminal, a first money transfer response message to the second terminal includes:
when the role flag of the first terminal is a payer role flag and/or the role flag of the second terminal is a payee role flag, the capability flag of the second terminal indicates that the second terminal is capable of submitting a transaction processing request to the server, and the payment account attribute of the second terminal is a merchant account, sending, by the first terminal, the first money transfer response message to the second terminal, namely, performing step 404a; or
when the role flag of the first terminal is a payee role flag and/or the role flag of the second terminal is a payer role flag, the capability flag of the second terminal indicates that the second terminal is capable of submitting a transaction processing request to the server, and the payment account attribute of the first terminal is a personal account, sending, by the first terminal, the first money transfer response message to the second terminal, namely, performing step 404a.

According to the transaction processing method provided in this embodiment of the present invention, after receiving the first money transfer request message sent by the second terminal, the first terminal determines that the money transfer request collision exists, and then, the first terminal determines a payee that is capable of submitting a transaction processing request to the transaction server and whose payment account attribute is a merchant account as a transaction initiator, or determines a payer capable of submitting a transaction processing request to the transaction server as a transaction initiator, so that the first terminal sends the first money transfer response message to the second terminal, in response to the first money transfer request message sent by the second terminal, and the second terminal skips replying to the second money transfer request message sent by the first terminal, namely, the second terminal skips sending the second money transfer response message to the first terminal and ignores the second money transfer request message sent by the first terminal. This effectively resolves a problem of a money transfer request collision in near-field communication.

Specifically, the first money transfer request message further includes a role flag of the second terminal and a payment account attribute of the second terminal, the role flag of the second terminal is a payer role flag or a payee role flag, the second request message further includes a role flag of the first terminal and a payment account attribute of the first terminal, and the role flag of the first terminal is a payer role flag or a payee role flag.

The skipping, by the first terminal, replying to the first money transfer request message includes:
when the role flag of the first terminal is a payee role flag and/or the role flag of the second terminal is a payer role flag, the capability flag of the first terminal indicates that the first terminal is capable of submitting a transaction processing request to the server, and the payment account attribute of the first terminal is a merchant account, skipping, by the first terminal, replying to the first money transfer request message, namely, performing step 404c; or
when the role flag of the first terminal is a payer role flag and/or the role flag of the second terminal is a payee role flag, the capability flag of the first terminal indicates that the first terminal is capable of submitting a transaction processing request to the server, and the payment account attribute of the second terminal is a personal account, skipping, by the first terminal, replying to the first money transfer request message, namely, performing step 404c.

According to the transaction processing method provided in this embodiment of the present invention, after receiving the first money transfer request message sent by the second terminal, the first terminal determines that the money transfer request collision exists, and then, the first terminal determines a payee that is capable of submitting a transaction processing request to the transaction server and whose payment account attribute is a merchant account as a transaction initiator, or determines a payer capable of submitting a transaction processing request to the transaction server as a transaction initiator, so that the first terminal skips replying to the first money transfer request message sent by the second terminal, namely, the first terminal skips sending the first money transfer response message to the second terminal and ignores the first money transfer request message sent by the second terminal, and further waits for the second money transfer response message sent by the second terminal, in response to the second money transfer request message sent by the first terminal. This effectively resolves a problem of a money transfer request collision in near-field communication.

It should be noted that the role flag may be preconfigured by a user or configured by a user before the money transfer request message is sent.

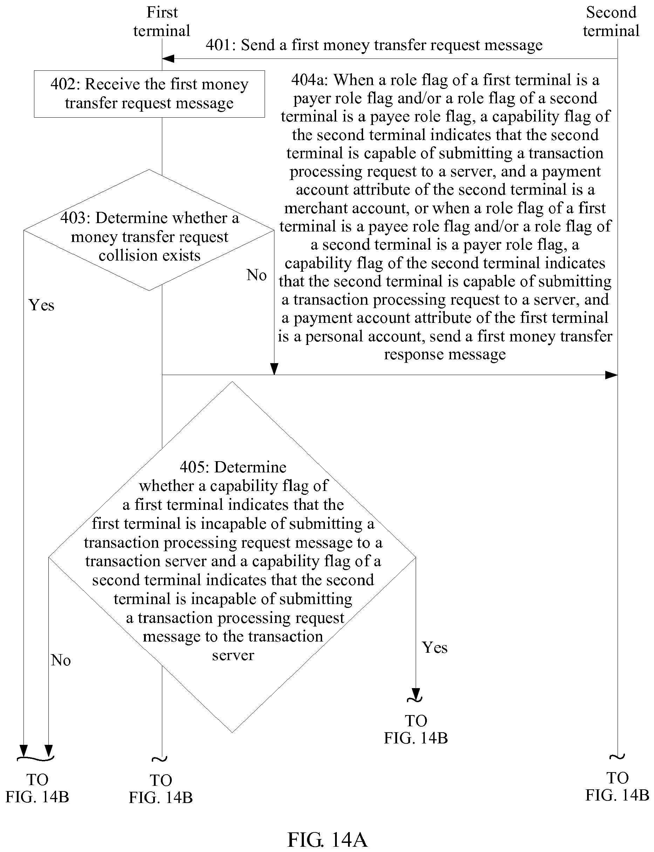

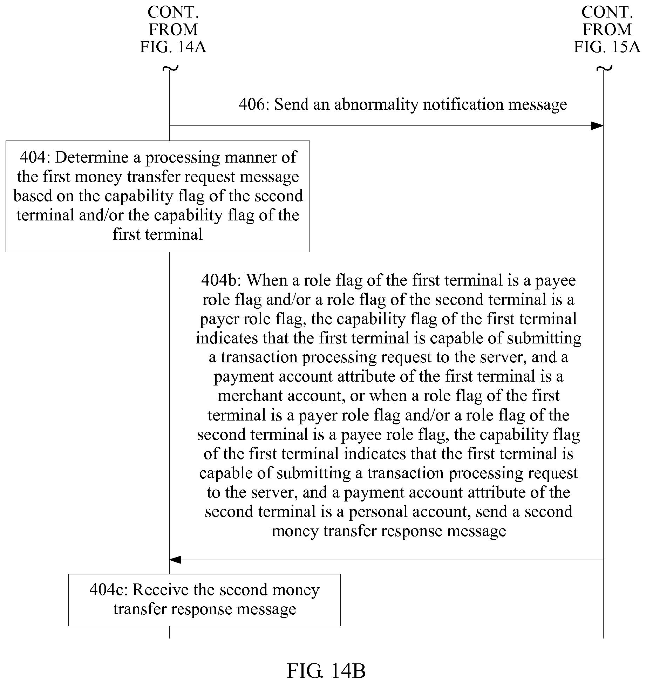

Specifically, based on FIG. 9, as shown in FIG. 14A and FIG. 14B, the first money transfer request message further includes a random number of the second terminal, the random number of the second terminal is generated randomly by the second terminal, the second money transfer request message further includes a random number of the first terminal, the random number of the first terminal is generated randomly by the first terminal, and the random number of the first terminal is of a same length as the random number of the second terminal.

The sending, by the first terminal, a first money transfer response message to the second terminal includes:
when the capability flag of the first terminal indicates that the first terminal is capable of submitting a transaction processing request to the transaction server, and the capability flag of the second terminal indicates that the second terminal is capable of submitting a transaction processing request to the transaction server, comparing, by the first terminal, the random number of the first terminal and the random number of the second terminal to determine whether they satisfy a first preset rule; and if yes, sending, by the first terminal, the first money transfer response message to the second terminal, and skipping, by the second terminal, replying to the second money transfer request message, namely, performing step 404a.

The first money transfer request message further includes a random number of the second terminal, the random number of the second terminal is generated randomly by the second terminal, the second money transfer request message further includes a random number of the first terminal, the random number of the first terminal is generated randomly by the first terminal, and the random number of the first terminal is of a same length as the random number of the second terminal.

The skipping, by the first terminal, replying to the first money transfer request message includes:
when the capability flag of the first terminal indicates that the first terminal is capable of submitting a transaction processing request to the transaction server, and the capability flag of the second terminal indicates that the second terminal is capable of submitting a transaction processing request to the transaction server, comparing, by the first terminal, the random number of the first terminal and the random number of the second terminal to determine whether they satisfy a first preset rule; and if no, skipping, by the first terminal, replying to the first money transfer request message, and receiving or waiting to receive the second money transfer response message sent by the second terminal, namely, performing step 404c.

The first preset rule is that the random number of the first terminal is greater than or equal to the random number of the second terminal; or the first preset rule is that the random number of the second terminal is greater than or equal to the random number of the first terminal; or the first preset rule is that when random numbers, in a same predetermined range, of the random number of the first terminal and the random number of the second terminal satisfy a first predetermined relationship, it is determined that a random number, out of the predetermined range, of the random number of the first terminal is greater than a random number, out of the predetermined range, of the random number of the second terminal, or that when random numbers, in a same predetermined range, of the random number of the first terminal and the random number of the second terminal do not satisfy a first predetermined relationship, it is determined that a random number, out of the predetermined range, of the random number of the first terminal is less than a random number, out of the predetermined range, of the random number of the second terminal, where the first predetermined relationship is that a random number, in the predetermined range, of the random number of the first terminal is greater than or equal to a random number, in the predetermined range, of the random number of the second terminal, or that a random number, in the predetermined range, of the random number of the first terminal is less than a random number, in the predetermined range, of the random number of the second terminal.

For example, the random number of the first terminal and the random number of the second terminal are both eight digits. The random number of the first terminal is 12345678, and the random number of the second terminal is 87654321. A predetermined range is first two digits, a random number, in the predetermined range, of the random number of the first terminal is 12, and a random number, in the predetermined range, of the random number of the second terminal is 87. The random number, in the predetermined range, of the random number of the first terminal and the random number, in the predetermined range, of the random number of the second terminal are compared. When they satisfy the first predetermined relationship, for example, when "12" is less than "87", a random number, out of the predetermined range, of the random number of the first terminal and a random number, out of the predetermined range, of the random number of the second terminal are compared, to determine whether a magnitude relationship between "345678" and "654321" satisfies the first preset rule.

It should be noted that the second terminal may process the received second money transfer request message and the first money transfer request message with reference to a method for processing the first money transfer request message and the second money transfer request message by the first terminal.

### Embodiment 3

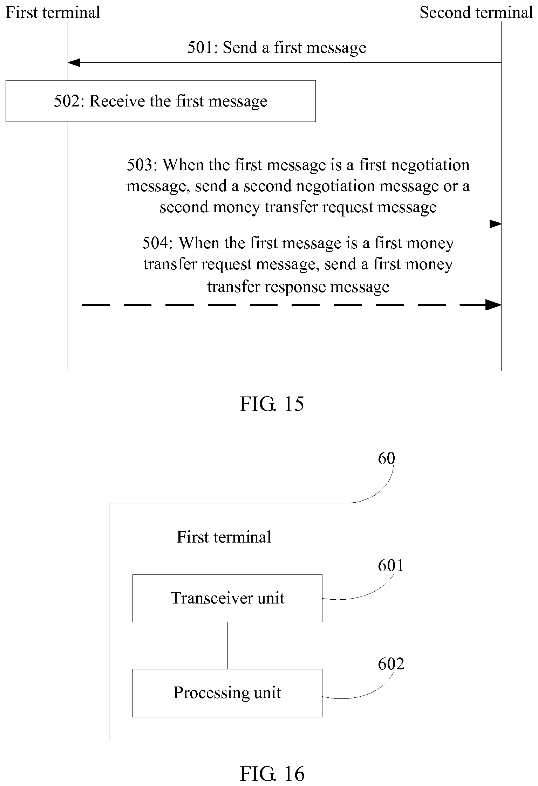

This embodiment of the present invention provides a transaction processing method. As shown in FIG. 15, the method includes the following steps.

Step 501: A second terminal sends a first message to a first terminal.

The first message is a first negotiation message or a first money transfer request message. The first negotiation message is used to instruct the first terminal to send a money transfer request message to the second terminal or instruct the second terminal to send a money transfer request message to the first terminal. The first money transfer request message includes money transfer information supported by the second terminal.

Step 502: The first terminal receives the first message.

When the first message is the first negotiation message, step 503 is performed. When the first message is the first money transfer request message, step 504 is performed.

Step 503: The first terminal sends a second negotiation message or a second money transfer request message to the second terminal.

Specifically, the first terminal determines whether the first terminal is used as a transaction initiator; and if the first terminal is used as a transaction initiator, the first terminal sends the second money transfer request message to the second terminal, where the second money transfer request message includes money transfer information supported by the first terminal; or if the first terminal is not used as the transaction initiator, the first terminal sends the second negotiation message to the second terminal, where the second negotiation message is used to instruct the second terminal to send a money transfer request message to the first terminal.

Step 504: The first terminal sends a first money transfer response message to the second terminal.

The first money transfer response message is used to reply to the first money transfer request message.

According to the transaction processing method provided in this embodiment of the present invention, after receiving the first message sent by the second terminal, the first terminal determines whether the first message is the first negotiation message or the first money transfer request message; when the first message is the first negotiation message, the first terminal sends the second money transfer request message or the second negotiation message to the second terminal; or when the first message is the first money transfer request message, the first terminal determines the second terminal as a transaction initiator, and the first terminal sends the first money transfer response message to the second terminal. This effectively resolves a problem of a money transfer request collision in near-field communication.

### Embodiment 4

This embodiment of the present invention provides a first terminal 60, as shown in FIG. 16, including:
a transceiver unit 601, configured to receive a first money transfer request message sent by a second terminal, where the first money transfer request message includes a role flag of the second terminal, and the role flag of the second terminal is a payer role flag or a payee role flag; and
a processing unit 602, configured to: if determining that a money transfer request collision exists, determine a processing manner of the first money transfer request message based on the role flag of the second terminal and/or a role flag of the first terminal, where
the processing manner of the first money transfer request message is that the transceiver unit 601 is further configured to send a first money transfer response message to the second terminal, where the first money transfer response message is used to reply to the first money transfer request message; or that the processing unit 602 is further configured to determine to skip replying to the first money transfer request message; and
the money transfer request collision means that simultaneously when or within a preset period in which the first terminal receives the first money transfer request message, the first terminal sends a second money transfer request message to the second terminal, where the second money transfer request message includes the role flag of the first terminal, and the role flag of the first terminal is a payer role flag or a payee role flag.

After the first terminal provided in this embodiment of the present invention receives the first money transfer request message sent by the second terminal, if the first terminal sends the second money transfer request message to the second terminal simultaneously when the first terminal receives the first money transfer request message, or the first terminal sends the second money transfer request message to the second terminal within the preset period before or after a moment at which the first terminal receives the first money transfer request message, the first terminal determines that the money transfer request collision exists, and then, the first terminal determines, based on the role flag of the second terminal and/or the role flag of the first terminal, a transaction initiator and that a money transfer request message sent by the transaction initiator is a request message for initiating a transaction, so that the first terminal sends the first money transfer response message to the second terminal, in response to the first money transfer request message sent by the second terminal, and the second terminal skips replying to the second money transfer request message sent by the first terminal, namely, the second terminal skips sending the second money transfer response message to the first terminal and ignores the second money transfer request message sent by the first terminal; or the first terminal skips replying to the first money transfer request message sent by the second terminal, namely, the first terminal skips sending the first money transfer response message to the second terminal and ignores the first money transfer request message sent by the second terminal, and the first terminal further receives or waits to receive the second money transfer response message sent by the second terminal, in response to the second money transfer request message sent by the first terminal. This effectively resolves a problem of a money transfer request collision in near-field communication.

In this embodiment of the present invention, the first terminal 60 is presented in a form of a functional unit. The "unit" herein may be an application-specific integrated circuit (application-specific integrated circuit, ASIC), a circuit, a processor that executes one or more software or firmware programs and a memory, an integrated logic circuit, and/or other components that can provide the foregoing functions. In a simple embodiment, a person skilled in the art may figure out that the form shown in FIG. 16 may be used for the first terminal 60. The transceiver unit 601 and the processing unit 602 may be implemented by the mobile phone in FIG. 3. Specifically, the transceiver unit 501 may be implemented by the RF circuit 25, and the processing unit 602 may be implemented by the processor 22.

### Embodiment 5

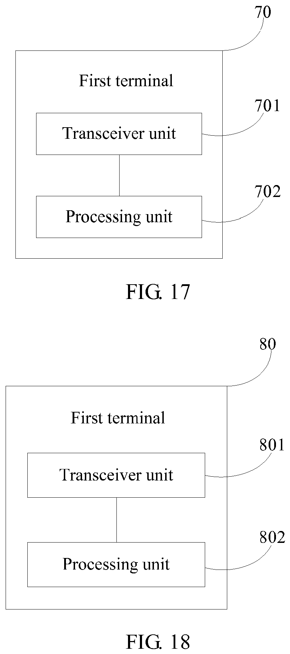

This embodiment of the present invention provides a first terminal 70, as shown in FIG. 17, including:
a transceiver unit 701, configured to receive a first money transfer request message sent by a second terminal, where the first money transfer request message includes a capability flag of the second terminal, and the capability flag of the second terminal is used to indicate whether the second terminal is capable of submitting a transaction processing request to a transaction server; and
a processing unit 702, configured to: if determining that a money transfer request collision exists, determine a processing manner of the first money transfer request message based on a capability flag of the first terminal and/or the capability flag of the second terminal, where
the processing manner of the first money transfer request message is that the transceiver unit 701 is further configured to send a first money transfer response message to the second terminal, where the first money transfer response message is used to reply to the first money transfer request message; or that the processing unit 702 is further configured to determine to skip replying to the first money transfer request message; and
the money transfer request collision means that simultaneously when or within a preset period in which the first terminal receives the first money transfer request message, the first terminal sends a second money transfer request message to the second terminal, where the second money transfer request message includes the capability flag of the first terminal, and the capability flag of the first terminal is used to indicate whether the first terminal is capable of submitting a transaction processing request to the transaction server.

After receiving the first money transfer request message sent by the second terminal, the first terminal provided in this embodiment of the present invention determines that the money transfer request collision exists, and then, the first terminal determines, based on the capability flag of the second terminal and/or the capability flag of the first terminal, a transaction initiator and that a money transfer request message sent by the transaction initiator is a request message for initiating a transaction, so that the first terminal sends the first money transfer response message to the second terminal, in response to the first money transfer request message sent by the second terminal, and the second terminal skips replying to the second money transfer request message sent by the first terminal, namely, the second terminal skips sending a second money transfer response message to the first terminal and ignores the second money transfer request message sent by the first terminal; or the first terminal skips replying to the first money transfer request message sent by the second terminal, namely, the first terminal skips sending the first money transfer response message to the second terminal and ignores the first money transfer request message sent by the second terminal, and further waits for the second money transfer response message sent by the second terminal, in response to the second money transfer request message sent by the first terminal. This effectively resolves a problem of a money transfer request collision in near-field communication.

In this embodiment of the present invention, the first terminal 70 is presented in a form of a functional unit. The "unit" herein may be an application-specific integrated circuit (application-specific integrated circuit, ASIC), a circuit, a processor that executes one or more software or firmware programs and a memory, an integrated logic circuit, and/or other components that can provide the foregoing functions. In a simple embodiment, a person skilled in the art may figure out that the form shown in FIG. 17 may be used for the first terminal 70. The transceiver unit 701 and the processing unit 702 may be implemented by the mobile phone in FIG. 3. Specifically, the transceiver unit 701 may be implemented by the RF circuit 25, and the processing unit 702 may be implemented by the processor 22.

### Embodiment 6

This embodiment of the present invention provides a first terminal 80, as shown in FIG. 18, including:
a transceiver unit 801, configured to receive a first message sent by a second terminal; and
a processing unit 802, configured to determine whether the first message is a first negotiation message or a first money transfer request message, where the first negotiation message is used to instruct the first terminal to send a money transfer request message to the second terminal or instruct the second terminal to send a money transfer request message to the first terminal, where
the transceiver unit 801 is further configured to: when the first message is the first negotiation message, the processing unit determines whether the first terminal is used as a transaction initiator, and if the first terminal is used as the transaction initiator, send a second money transfer request message to the second terminal; or if the first terminal is not used as the transaction initiator, send a second negotiation message to the second terminal, where the second negotiation message is used to instruct the second terminal to send a money transfer request message to the first terminal; or the transceiver unit 801 is further configured to: when the first message is the first money transfer request message, send a first money transfer response message to the second terminal, where the first money transfer response message is used to reply to the first money transfer request message.

After receiving the first message sent by the second terminal, the first terminal provided in this embodiment of the present invention determines whether the first message is the first negotiation message or the first money transfer request message; when the first message is the first negotiation message, the first terminal sends the second money transfer request message or the second negotiation message to the second terminal; or when the first message is the first money transfer request message, the first terminal determines the second terminal as a transaction initiator, and the first terminal sends the first money transfer response message to the second terminal. This effectively resolves a problem of a money transfer request collision in near-field communication.

In this embodiment of the present invention, the first terminal 80 is presented in a form of a functional unit. The "unit" herein may be an application-specific integrated circuit (application-specific integrated circuit, ASIC), a circuit, a processor that executes one or more software or firmware programs and a memory, an integrated logic circuit, and/or other components that can provide the foregoing functions. In a simple embodiment, a person skilled in the art may figure out that the form shown in FIG. 18 may be used for the first terminal 80. The transceiver unit 801 and the processing unit 802 may be implemented by the mobile phone in FIG. 3. Specifically, the transceiver unit 801 may be implemented by the RF circuit 25, and the processing unit 802 may be implemented by the processor 22.

The foregoing mainly describes the solutions provided in the embodiments of the present invention from the perspective of interaction between network elements. It can be understood that, to implement the foregoing functions, the network elements such as the terminal include corresponding hardware structures and/or software modules for performing the functions. A person skilled in the art may be aware that algorithm steps in examples described with reference to the embodiments disclosed in this specification can be implemented by hardware or a combination of hardware and computer software in the embodiments of the present invention. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of the embodiments of the present invention.

In this embodiment of the present invention, the terminal may be divided into function modules based on the foregoing method example. For example, the function module division may be performed by function, or two or more functions may be integrated into one processing module. The integrated module may be implemented in a form of hardware, or may be implemented in a form of a software functional module. It should be noted that the module division in the embodiments of the present invention is an example, is merely logical function division, and may be other division in actual implementation.

When the function module division is performed by function, FIG. 15 is a possible schematic composition diagram of the first terminal in the foregoing embodiment. The transceiver unit 601 is configured to support the first terminal in performing step 301 in the data processing method shown in FIG. 4, step 401 in the data processing method shown in FIG. 9, and the like.

The foregoing descriptions are merely specific implementations of the embodiments of the present invention, but are not intended to limit the protection scope of the embodiments of the present invention. Therefore, the protection scope of the embodiments of the present invention shall be subject to the protection scope of the appended claims.

## Claims

1. A transaction processing method applied to near-field communication, comprising:
receiving, by a first terminal, a first money transfer request message sent by a second terminal, wherein the first money transfer request message comprises a role flag of the second terminal, and the role flag of the second terminal is a payer role flag or a payee role flag; and
determining, by the first terminal, a processing manner of the first money transfer request message based on the role flag of the second terminal and/or a role flag of the first terminal if a money transfer request collision exists, wherein
the processing manner of the first money transfer request message is sending, by the first terminal, a first money transfer response message to the second terminal, wherein the first money transfer response message is used to reply to the first money transfer request message or skipping, by the first terminal, replying to the first money transfer request message; and
the money transfer request collision means that simultaneously when the first terminal receives the first money transfer request message, the first terminal sends a second money transfer request message to the second terminal, wherein the second money transfer request message comprises the role flag of the first terminal, and the role flag of the first terminal is a payer role flag or a payee role flag,
wherein the skipping, by the first terminal, replying to the first money transfer request message comprises:
when the role flag of the first terminal is a payer role flag and the role flag of the second terminal is a payee role flag, skipping, by the first terminal, replying to the first money transfer request message, and receiving or waiting to receive a second money transfer response message sent by the second terminal, wherein the second money transfer response message is used to reply to the second money transfer request message, and
wherein the sending, by the first terminal, a first money transfer response message to the second terminal comprises:
when the role flag of the first terminal is a payee role flag and the role flag of the second terminal is a payer role flag, sending, by the first terminal, the first money transfer response message to the second terminal, and skipping, by the second terminal, replying to the second money transfer request message.

2. The method according to claim 1, wherein the first money transfer request message further comprises a payment account attribute of the second terminal, the second money transfer request message further comprises a payment account attribute of the first terminal, and the payment account attribute is a personal account or a merchant account; and
the skipping, by the first terminal, replying to the first money transfer request message comprises:
when the role flag of the first terminal is a payer role flag and the role flag of the second terminal is a payee role flag, and the payment account attribute of the second terminal is a personal account, skipping, by the first terminal, replying to the first money transfer request message, and receiving or waiting to receive a second money transfer response message sent by the second terminal, wherein the second money transfer response message is used to reply to the second money transfer request message; or
when the role flag of the first terminal is a payee role flag and the role flag of the second terminal is a payer role flag, and the payment account attribute of the first terminal is a merchant account, skipping, by the first terminal, replying to the first money transfer request message, and receiving or waiting to receive a second money transfer response message sent by the second terminal, wherein the second money transfer response message is used to reply to the second money transfer request message.

3. The method according to claim 1, wherein the first money transfer request message further comprises a payment account attribute of the second terminal, the second money transfer request message further comprises a payment account attribute of the first terminal, and the payment account attribute is a personal account or a merchant account; and
the sending, by the first terminal, a first money transfer response message to the second terminal comprises:
when the role flag of the first terminal is a payer role flag and the role flag of the second terminal is a payee role flag, and the payment account attribute of the second terminal is a merchant account, sending, by the first terminal, the first money transfer response message to the second terminal, and skipping, by the second terminal, replying to the second money transfer request message; or
when the role flag of the first terminal is a payee role flag and the role flag of the second terminal is a payer role flag, and the payment account attribute of the first terminal is a personal account, sending, by the first terminal, the first money transfer response message to the second terminal, and skipping, by the second terminal, replying to the second money transfer request message.

4. The method according to any one of claims 1 to 3, the determining, by the first terminal, a processing manner of the first money transfer request based on the role flag of the second terminal or a role flag of the first terminal if a money transfer request collision exists specifically comprises:
if the money transfer request collision exists, determining, by the first terminal, whether the role flag of the first terminal is the same as the role flag of the second terminal, and if they are different, determining, by the first terminal, the processing manner of the first money transfer request based on the role flag of the second terminal and/or the role flag of the first terminal.

5. The method according to claim 1, wherein the method further comprises:
determining, by the first terminal, whether the money transfer request collision exist when the role flag of the first terminal is different from the role flag of the second terminal; or
processing, by the first terminal, the first money transfer request message when the role flag of the first terminal is different from the role flag of the second terminal.

6. The method according to claim 1, wherein after the first terminal does not reply to the first money transfer request message, the method further comprises:
receiving, by the first terminal, or waiting to receive a second money transfer response message sent by the second terminal, wherein the second money transfer response message is used to reply to the second money transfer request message.

7. A first terminal configured to perform near-field communication with a second terminal, comprising:
a transceiver unit, configured to receive a first money transfer request message sent by the second terminal, wherein the first money transfer request message comprises a role flag of the second terminal, and the role flag of the second terminal is a payer role flag or a payee role flag; and
a processing unit, configured to: if determining that a money transfer request collision exists, determine a processing manner of the first money transfer request message based on the role flag of the second terminal and/or a role flag of the first terminal, wherein
the processing manner of the first money transfer request message is that the transceiver unit is further configured to send a first money transfer response message to the second terminal, wherein the first money transfer response message is used to reply to the first money transfer request message; or that the processing unit is further configured to determine to skip replying to the first money transfer request message; and
the money transfer request collision means that simultaneously when the first terminal receives the first money transfer request message, the first terminal sends a second money transfer request message to the second terminal, wherein the second money transfer request message comprises the role flag of the first terminal, and the role flag of the first terminal is a payer role flag or a payee role flag,
wherein the processing unit is specifically configured to:
when the role flag of the first terminal is a payer role flag and/or the role flag of the second terminal is a payee role flag, skip replying to the first money transfer request message; and the transceiver unit is further configured to receive or wait to receive a second money transfer response message sent by the second terminal, wherein the second money transfer response message is used to reply to the second money transfer request message; and
wherein the transceiver unit is specifically configured to:
when the role flag of the first terminal is a payee role flag and the role flag of the second terminal is a payer role flag, send the first money transfer response message to the second terminal, and the second terminal skips replying to the second money transfer request message.

8. The first terminal according to claim 7, wherein the first money transfer request message further comprises a payment account attribute of the second terminal, the second money transfer request message further comprises a payment account attribute of the first terminal, and the payment account attribute is a personal account or a merchant account; and
the processing unit is specifically configured to:
when the role flag of the first terminal is a payer role flag and the role flag of the second terminal is a payee role flag, and the payment account attribute of the second terminal is a personal account, skip replying to the first money transfer request message; and the transceiver unit is further configured to receive or wait to receive a second money transfer response message sent by the second terminal, wherein the second money transfer response message is used to reply to the second money transfer request message; or
when the role flag of the first terminal is a payee role flag and the role flag of the second terminal is a payer role flag, and the payment account attribute of the first terminal is a merchant account, skip replying to the first money transfer request message; and the transceiver unit is further configured to receive or wait to receive a second money transfer response message sent by the second terminal, wherein the second money transfer response message is used to reply to the second money transfer request message.

9. The first terminal according to claim 7, wherein the first money transfer request message further comprises a payment account attribute of the second terminal, the second money transfer request message further comprises a payment account attribute of the first terminal, and the payment account attribute is a personal account or a merchant account; and
the transceiver unit is specifically configured to:
when the role flag of the first terminal is a payer role flag and/or the role flag of the second terminal is a payee role flag, and the payment account attribute of the second terminal is a merchant account, send the first money transfer response message to the second terminal, and the second terminal skips replying to the second money transfer request message; or
when the role flag of the first terminal is a payee role flag and/or the role flag of the second terminal is a payer role flag, and the payment account attribute of the first terminal is a personal account, send the first money transfer response message to the second terminal, and the second terminal skips replying to the second money transfer request message.

10. The first terminal according to any one of claims 7 to 9, wherein if a money transfer request collision exists, the first terminal determines a processing manner of the first money transfer request based on the role flag of the second terminal and/or a role flag of the first terminal, and the processing unit is specifically configured to:
if the money transfer request collision exists, determine whether the role flag of the first terminal is the same as the role flag of the second terminal, and if they are different, determine the processing manner of the first money transfer request based on the role flag of the second terminal and/or the role flag of the first terminal;
wherein the processing unit is further configured to:
determine whether the role flag of the first terminal is the same as the role flag of the second terminal, wherein if they are the same,
the transceiver unit is further configured to send an abnormality notification message to the second terminal, wherein the abnormality notification message is used to indicate that there is an error in a current transaction; or
the processing unit is further configured to skip replying to the first money transfer request message; or
the processing unit is further configured to skip replying to the first money transfer request message, and indicate that there is an error in a current transaction.

11. The first terminal according to any one of claims 7 to 10, wherein the processing unit is further configured to:
determine that the money transfer request collision does not exist, and the transceiver unit sends a first money transfer response message to the second terminal, wherein the first money transfer response message is used to reply to the first money transfer request message.

## Patentansprüche

1. Transaktionsverarbeitungsverfahren, das auf Nahfeldkommunikation angewandt wird und Folgendes umfasst:
Empfangen, durch ein erstes Endgerät, einer von einem zweiten Endgerät gesendeten ersten Geldtransfer-Anforderungsnachricht,
wobei die erste Geldtransfer-Anforderungsnachricht ein Rollenflag des zweiten Endgerätes umfasst und das Rollenflag des zweiten Endgerätes ein Zahler-Rollenflag oder ein Zahlungsempfänger-Rollenflag ist; und
Bestimmen, durch das erste Endgerät, einer Verarbeitungsweise der ersten Geldtransfer-Anforderungsnachricht auf der Grundlage des Rollenflags des zweiten Endgerätes und/oder eines Rollenflags des ersten Endgerätes, falls eine Geldtransfer-Anforderungskollision existiert,
wobei die Verarbeitungsweise der ersten Geldtransfer-Anforderungsnachricht das Senden, durch das erste Endgerät, einer ersten Geldtransfer-Antwortnachricht an das zweite Endgerät ist,
wobei die erste Geldtransfer-Antwortnachricht verwendet wird, um auf die erste Geldtransfer-Anforderungsnachricht zu antworten, oder um das Antworten auf die erste Geldtransfer-Anforderungsnachricht durch das erste Endgerät zu überspringen;
und
die Geldtransfer-Anforderungskollision bedeutet, dass wenn das erste Endgerät die erste Geldtransfer-Anforderungsnachricht empfängt, das erste Endgerät gleichzeitig eine zweite Geldtransfer-Anforderungsnachricht an das zweite Endgerät sendet,
wobei die zweite Geldtransfer-Anforderungsnachricht das Rollenflag des ersten Endgerätes enthält und das Rollenflag des ersten Endgerätes ein Zahler-Rollenflag oder ein Zahlungsempfänger-Rollenflag ist,
wobei das Überspringen, durch das erste Endgerät, des Antwortens auf die erste Geldtransfer-Anforderungsnachricht Folgendes umfasst:
wenn das Rollenflag des ersten Endgerätes ein Zahler-Rollenflag und das Rollenflag des zweiten Endgerätes ein Zahlungsempfänger-Rollenflag ist, Überspringen, durch das erste Endgerät, des Antwortens auf die erste Geldtransfer-Anforderungsnachricht und Empfangen oder Warten auf den Empfang einer von dem zweiten Endgerät gesendeten zweiten Geldtransfer-Antwortnachricht,
wobei die zweite Geldtransfer-Antwortnachricht verwendet wird, um auf die zweite Geldtransfer-Anforderungsnachricht zu antworten, und
wobei das Senden, durch das erste Endgerät, einer ersten Geldtransfer-Antwortnachricht an das zweite Endgerät Folgendes umfasst:
wenn das Rollenflag des ersten Endgerätes ein Zahlungsempfänger-Rollenflag ist und das Rollenflag des zweiten Endgerätes ein Zahler-Rollenflag ist, Senden, durch das erste Endgerät, der ersten Geldtransfer-Antwortnachricht an das zweite Endgerät und Überspringen, durch das zweite Endgerät, des Antwortens auf die zweite Gel dtransfer - Anforderungsnachricht.

2. Verfahren gemäß Anspruch 1, wobei die erste Geldtransfer-Anforderungsnachricht ferner ein Zahlungskonto-Attribut des zweiten Endgerätes umfasst, die zweite Geldtransfer-Anforderungsnachricht ferner ein Zahlungskonto-Attribut des ersten Endgerätes umfasst und das Zahlungskonto-Attribut ein persönliches Konto oder ein Händlerkonto ist; und
das Überspringen, durch das erste Endgerät, des Antwortens auf die erste Geldtransfer-Anforderungsnachricht Folgendes umfasst:
wenn das Rollenflag des ersten Endgerätes ein Zahler-Rollenflag und das Rollenflag des zweiten Endgerätes ein Zahlungsempfänger-Rollenflag ist und das Zahlungskonto-Attribut des zweiten Endgerätes ein persönliches Konto ist, Überspringen, durch das erste Endgerät, des Antwortens auf die erste Geldtransfer-Anforderungsnachricht und Empfangen oder Warten auf den Empfang einer von dem zweiten Endgerät gesendeten zweiten Geldtransfer-Antwortnachricht,
wobei die zweite Geldtransfer-Antwortnachricht verwendet wird, um auf die zweite Geldtransfer-Anforderungsnachricht zu antworten; oder
wenn das Rollenflag des ersten Endgerätes ein Zahlungsempfänger-Rollenflag ist und das Rollenflag des zweiten Endgerätes ein Zahler-Rollenflag ist und das Zahlungskonto-Attribut des ersten Endgerätes ein Händlerkonto ist, Überspringen,
durch das erste Endgerät, des Antwortens auf die erste Geldtransfer-Anforderungsnachricht und Empfangen oder Warten auf den Empfang einer von dem zweiten Endgerät gesendeten zweiten Geldtransfer-Antwortnachricht,
wobei die zweite Geldtransfer-Antwortnachricht verwendet wird, um auf die zweite Geldtransfer-Anforderungsnachricht zu antworten.

3. Verfahren gemäß Anspruch 1, wobei die erste Geldtransfer-Anforderungsnachricht ferner ein Zahlungskonto-Attribut des zweiten Endgerätes umfasst, die zweite Geldtransfer-Anforderungsnachricht ferner ein Zahlungskonto-Attribut des ersten Endgerätes umfasst und das Zahlungskonto-Attribut ein persönliches Konto oder ein Händlerkonto ist; und
das Senden, durch das erste Endgerät, einer ersten Geldtransfer-Antwortnachricht an das zweite Endgerät Folgendes umfasst:
wenn das Rollenflag des ersten Endgerätes ein Zahler-Rollenflag ist und das Rollenflag des zweiten Endgerätes ein Zahlungsempfänger-Rollenflag ist und das Zahlungskonto-Attribut des zweiten Endgerätes ein Händlerkonto ist, Senden, durch das erste Endgerät, der ersten Geldtransfer-Antwortnachricht an das zweite Endgerät und Überspringen, durch das zweite Endgerät, des Antwortens auf die zweite Geldtransfer-Anforderungsnachricht; oder
wenn das Rollenflag des ersten Endgerätes ein Zahlungsempfänger-Rollenflag ist und das Rollenflag des zweiten Endgerätes ein Zahler-Rollenflag ist und das Zahlungskonto-Attribut des ersten Endgerätes ein persönliches Konto ist, Senden,
durch das erste Endgerät, der ersten Geldtransfer-Antwortnachricht an das zweite Endgerät und Überspringen, durch das zweite Endgerät, des Antwortens auf die zweite Geldtransfer-Anforderungsnachricht.

4. Verfahren gemäß einem der Ansprüche 1 bis 3, wobei das Bestimmen, durch das erste Endgerät, einer Verarbeitungsweise der ersten Geldtransferanforderung auf der Grundlage des Rollenflags des zweiten Endgerätes oder eines Rollenflags des ersten Endgerätes, falls eine Geldtransfer-Anforderungskollision existiert, speziell Folgendes umfasst:
falls die Geldtransfer-Anforderungskollision existiert, Bestimmen, durch das erste Endgerät, ob das Rollenflag des ersten Endgerätes dasselbe ist wie das Rollenflag des zweiten Endgerätes, und falls sie unterschiedlich sind, Bestimmen, durch das erste Endgerät, der Verarbeitungsweise der ersten Geldtransferanforderung basierend auf dem Rollenflag des zweiten Endgerätes und/oder dem Rollenflag des ersten Endgerätes.

5. Verfahren gemäß Anspruch 1, wobei das Verfahren ferner Folgendes umfasst:
Bestimmen, durch das erste Endgerät, ob die Geldtransfer-Anforderungskollision existiert, wenn das Rollenflag des ersten Endgerätes sich von dem Rollenflag des zweiten Endgerätes unterscheidet; oder
Verarbeiten, durch das erste Endgerät, der ersten Geldtransfer-Anforderungsnachricht, wenn sich das Rollenflag des ersten Endgerätes von dem Rollenflag des zweiten Endgerätes unterscheidet.

6. Verfahren gemäß Anspruch 1, wobei, nachdem das erste Endgerät nicht auf die erste Geldtransfer-Anforderungsnachricht geantwortet hat, das Verfahren ferner Folgendes umfasst:
Empfangen, durch das erste Endgerät, einer von dem zweiten Endgerät gesendeten zweiten Geldtransfer-Antwortnachricht, oder Warten auf das Empfangen,
wobei die zweite Geldtransfer-Antwortnachricht verwendet wird, um auf die zweite Geldtransfer-Anforderungsnachricht zu antworten.

7. Erstes Endgerät, das so ausgebildet ist, dass es eine Nahfeldkommunikation mit einem zweiten Endgerät durchführt, und das Folgendes umfasst:
eine Transceiver-Einheit, die so ausgebildet ist, dass sie eine von dem zweiten Endgerät gesendete erste Geldtransfer-Anforderungsnachricht empfängt,
wobei die erste Geldtransfer-Anforderungsnachricht ein Rollenflag des zweiten Endgerätes umfasst und das Rollenflag des zweiten Endgerätes ein Zahler-Rollenflag oder ein Zahlungsempfänger-Rollenflag ist; und
eine Verarbeitungseinheit, die für Folgendes ausgelegt ist:
falls festgestellt wird, dass eine Geldtransfer-Anforderungskollision existiert,
Bestimmen einer Verarbeitungsweise der ersten Geldtransfer-Anforderungsnachricht auf der Grundlage des Rollenflags des zweiten Endgerätes und/oder eines Rollenflags des ersten Endgerätes,
wobei die Verarbeitungsweise der ersten Geldtransfer-Anforderungsnachricht darin besteht, dass die Transceiver-Einheit ferner so ausgebildet ist, dass sie eine erste Geldtransfer-Antwortnachricht an das zweite Endgerät sendet,
wobei die erste Geldtransfer-Antwortnachricht verwendet wird, um auf die erste Geldtransfer-Anforderungsnachricht zu antworten; oder dass die Verarbeitungseinheit ferner so ausgebildet ist, dass sie bestimmt, das Antworten auf die erste Geldtransfer-Anforderungsnachricht zu überspringen; und
die Geldtransfer-Anforderungskollision bedeutet, dass wenn das erste Endgerät die erste Geldtransfer-Anforderungsnachricht empfängt, das erste Endgerät gleichzeitig eine zweite Geldtransfer-Anforderungsnachricht an das zweite Endgerät sendet,
wobei die zweite Geldtransfer-Anforderungsnachricht das Rollenflag des ersten Endgerätes enthält und das Rollenflag des ersten Endgerätes ein Zahler-Rollenflag oder ein Zahlungsempfänger-Rollenflag ist,
wobei die Verarbeitungseinheit speziell für Folgendes ausgelegt ist:
wenn das Rollenflag des ersten Endgerätes ein Zahler-Rollenflag und/oder das Rollenflag des zweiten Endgerätes ein Zahlungsempfänger-Rollenflag ist, Überspringen des Antwortens auf die erste Geldtransfer-Anforderungsnachricht; und
die Transceiver-Einheit ferner so ausgebildet ist, dass sie eine von dem zweiten Endgerät gesendete zweite Geldtransfer-Antwortnachricht empfängt oder auf den Empfang wartet,
wobei die zweite Geldtransfer-Antwortnachricht verwendet wird, um auf die zweite Geldtransfer-Anforderungsnachricht zu antworten; und
wobei die Transceiver-Einheit speziell für Folgendes ausgelegt ist:
wenn das Rollenflag des ersten Endgerätes ein Zahlungsempfänger-Rollenflag ist und das Rollenflag des zweiten Endgerätes ein Zahler-Rollenflag ist, Senden der ersten Geldtransfer-Antwortnachricht an das zweite Endgerät und Überspringen, durch das zweite Endgerät, des Antwortens auf die zweite Geldtransfer-Anforderungsnachricht.

8. Erstes Endgerät gemäß Anspruch 7, wobei die erste Geldtransfer-Anforderungsnachricht ferner ein Zahlungskonto-Attribut des zweiten Endgeräts umfasst, die zweite Geldtransfer-Anforderungsnachricht ferner ein Zahlungskonto-Attribut des ersten Endgeräts umfasst, und das Zahlungskonto-Attribut ein persönliches Konto oder ein Händlerkonto ist; und
die Verarbeitungseinheit speziell für Folgendes ausgebildet ist:
wenn das Rollenflag des ersten Endgerätes ein Zahler-Rollenflag ist und das Rollenflag des zweiten Endgerätes ein Zahlungsempfänger-Rollenflag ist und das Zahlungskonto-Attribut des zweiten Endgerätes ein persönliches Konto ist, Überspringen des Antwortens auf die erste Geldtransfer-Anforderungsnachricht; und
die Transceiver-Einheit ferner so ausgebildet ist, dass sie eine von dem zweiten Endgerät gesendete zweite Geldtransfer-Antwortnachricht empfängt oder auf den Empfang wartet,
wobei die zweite Geldtransfer-Antwortnachricht verwendet wird, um auf die zweite Geldtransfer-Anforderungsnachricht zu antworten; oder
wenn das Rollenflag des ersten Endgerätes ein Zahlungsempfänger-Rollenflag ist und das Rollenflag des zweiten Endgerätes ein Zahler-Rollenflag ist und das Zahlungskonto-Attribut des ersten Endgerätes ein Händlerkonto ist, Überspringen des Antwortens auf die erste Geldtransfer-Anforderungsnachricht; und
die Transceiver-Einheit ferner so ausgebildet ist, dass sie eine von dem zweiten Endgerät gesendete zweite Geldtransfer-Antwortnachricht empfängt oder auf den Empfang wartet,
wobei die zweite Geldtransfer-Antwortnachricht verwendet wird, um auf die zweite Geldtransfer-Anforderungsnachricht zu antworten.

9. Erstes Endgerät gemäß Anspruch 7, wobei die erste Geldtransfer-Anforderungsnachricht ferner ein Zahlungskonto-Attribut des zweiten Endgeräts umfasst, die zweite Geldtransfer-Anforderungsnachricht ferner ein Zahlungskonto-Attribut des ersten Endgeräts umfasst, und das Zahlungskonto-Attribut ein persönliches Konto oder ein Händlerkonto ist; und
die Transceiver-Einheit speziell für Folgendes ausgelegt ist:
wenn das Rollenflag des ersten Endgerätes ein Zahler-Rollenflag ist und/oder das Rollenflag des zweiten Endgerätes ein Zahlungsempfänger-Rollenflag ist und das Zahlungskonto-Attribut des zweiten Endgerätes ein Händlerkonto ist, Senden der ersten Geldtransfer-Antwortnachricht an das zweite Endgerät und Überspringen,
durch das zweite Endgerät, des Antwortens auf die zweite Geldtransfer-Anforderungsnachricht; oder
wenn das Rollenflag des ersten Endgerätes ein Zahlungsempfänger-Rollenflag ist und/oder das Rollenflag des zweiten Endgerätes ein Zahler-Rollenflag ist und das Zahlungskonto-Attribut des ersten Endgerätes ein persönliches Konto ist, Senden der ersten Geldtransfer-Antwortnachricht an das zweite Endgerät und Überspringen, durch das zweite Endgerät, des Antwortens auf die zweite Geldtransfer-Anforderungsnachricht.

10. Erstes Endgerät gemäß einem der Ansprüche 7 bis 9, wobei, falls eine Geldtransfer-Anforderungskollision existiert, das erste Endgerät eine Verarbeitungsweise der ersten Geldtransferanforderung basierend auf dem Rollenflag des zweiten Endgerätes und/oder einem Rollenflag des ersten Endgerätes bestimmt, und die Verarbeitungseinheit speziell für Folgendes ausgebildet ist:
falls die Geldtransfer-Anforderungskollision existiert, Bestimmen, ob das Rollenflag des ersten Endgerätes dasselbe ist wie das Rollenflag des zweiten Endgerätes, und
falls sie unterschiedlich sind, Bestimmen der Verarbeitungsweise der ersten Geldtransferanforderung basierend auf dem Rollenflag des zweiten Endgerätes und/oder dem Rollenflag des ersten Endgerätes;
wobei die Verarbeitungseinheit ferner für Folgendes ausgelegt ist:
Bestimmen, ob das Rollenflag des ersten Endgerätes dasselbe ist wie das Rollenflag des zweiten Endgerätes,
wobei, falls sie gleich sind, die Transceiver-Einheit ferner so ausgebildet ist, dass sie eine Anomalie-Benachrichtigungsmeldung an das zweite Endgerät sendet,
wobei die Anomalie-Benachrichtigungsmeldung verwendet wird, um anzuzeigen,
dass ein Fehler in einer laufenden Transaktion vorliegt; oder
die Verarbeitungseinheit ferner so ausgebildet ist, dass sie das Antworten auf die erste Geldtransfer-Anforderungsnachricht überspringt; oder
die Verarbeitungseinheit ferner so ausgebildet ist, dass sie das Antworten auf die erste Geldtransfer-Anforderungsnachricht überspringt und anzeigt, dass ein Fehler in einer laufenden Transaktion vorliegt.

11. Erstes Endgerät gemäß einem der Ansprüche 7 bis 10, wobei die Verarbeitungseinheit ferner für Folgendes ausgebildet ist:
Bestimmen, dass die Geldtransfer-Anforderungskollision nicht existiert und die Transceiver-Einheit eine erste Geldtransfer-Antwortnachricht an das zweite Endgerät sendet,
wobei die erste Geldtransfer-Antwortnachricht verwendet wird, um auf die erste Geldtransfer-Anforderungsnachricht zu antworten.

## Revendications

1. Procédé de traitement de transactions appliqué à une communication en champ proche, comprenant les étapes consistant à :
recevoir, par un premier terminal, un premier message de demande de transfert d'argent envoyé par un second terminal, le premier message de demande de transfert d'argent comprenant un indicateur de rôle du second terminal, et l'indicateur de rôle du second terminal étant un indicateur de rôle de payeur ou un indicateur de rôle de bénéficiaire ; et
déterminer, par le premier terminal, un mode de traitement du premier message de demande de transfert d'argent sur la base de l'indicateur de rôle du second terminal et/ou d'un indicateur de rôle du premier terminal s'il existe une collision de demandes de transfert d'argent,
le mode de traitement du premier message de demande de transfert d'argent consistant à envoyer, par le premier terminal, un premier message de réponse de transfert d'argent au second terminal, le premier message de réponse de transfert d'argent étant utilisé pour répondre au premier message de demande de transfert d'argent, ou à omettre, par le premier terminal, de répondre au premier message de demande de transfert d'argent ; et
la collision de demandes de transfert d'argent signifiant que, lorsque le premier terminal reçoit le premier message de demande de transfert d'argent, le premier terminal envoie simultanément un second message de demande de transfert d'argent au second terminal, le second message de demande de transfert d'argent comprenant l'indicateur de rôle du premier terminal, et l'indicateur de rôle du premier terminal étant un indicateur de rôle de payeur ou un indicateur de rôle de bénéficiaire,
le fait d'omettre, par le premier terminal, de répondre au premier message de demande de transfert d'argent comprenant l'étape consistant à :
lorsque l'indicateur de rôle du premier terminal est un indicateur de rôle de payeur et
l'indicateur de rôle du second terminal est un indicateur de rôle de bénéficiaire, omettre, par le premier terminal, de répondre au premier message de demande de transfert d'argent, et recevoir ou attendre de recevoir un second message de réponse de transfert d'argent envoyé par le second terminal, le second message de réponse de transfert d'argent étant utilisé pour répondre au second message de demande de transfert d'argent, et
l'envoi, par le premier terminal, d'un premier message de réponse de transfert d'argent au second terminal comprenant l'étape consistant à :
lorsque l'indicateur de rôle du premier terminal est un indicateur de rôle de bénéficiaire et l'indicateur de rôle du second terminal est un indicateur de rôle de payeur, envoyer, par le premier terminal, le premier message de réponse de transfert d'argent au second terminal, et omettre, par le second terminal, de répondre au second message de demande de transfert d'argent.

2. Procédé selon la revendication 1, dans lequel le premier message de demande de transfert d'argent comprend en outre un attribut de compte de paiement du second terminal, le second message de demande de transfert d'argent comprend en outre un attribut de compte de paiement du premier terminal, et l'attribut de compte de paiement est un compte personnel ou un compte marchand ; et
le fait d'omettre, par le premier terminal, de répondre au premier message de demande de transfert d'argent comprenant l'étape consistant à :
lorsque l'indicateur de rôle du premier terminal est un indicateur de rôle de payeur et l'indicateur de rôle du second terminal est un indicateur de rôle de bénéficiaire, et l'attribut de compte de paiement du second terminal est un compte personnel, omettre, par le premier terminal, de répondre au premier message de demande de transfert d'argent, et recevoir ou attendre de recevoir un second message de réponse de transfert d'argent envoyé par le second terminal, le second message de réponse de transfert d'argent étant utilisé pour répondre au second message de demande de transfert d'argent ; ou
lorsque l'indicateur de rôle du premier terminal est un indicateur de rôle de bénéficiaire et l'indicateur de rôle du second terminal est un indicateur de rôle de payeur, et l'attribut de compte de paiement du premier terminal est un compte marchand, omettre, par le premier terminal, de répondre au premier message de demande de transfert d'argent, et recevoir ou attendre de recevoir un second message de réponse de transfert d'argent envoyé par le second terminal, le second message de réponse de transfert d'argent étant utilisé pour répondre au second message de demande de transfert d'argent.

3. Procédé selon la revendication 1, dans lequel le premier message de demande de transfert d'argent comprend en outre un attribut de compte de paiement du second terminal, le second message de demande de transfert d'argent comprend en outre un attribut de compte de paiement du premier terminal, et l'attribut de compte de paiement est un compte personnel ou un compte marchand ; et
l'envoi, par le premier terminal, d'un premier message de réponse de transfert d'argent au second terminal comprenant l'étape consistant à :
lorsque l'indicateur de rôle du premier terminal est un indicateur de rôle de payeur et l'indicateur de rôle du second terminal est un indicateur de rôle de bénéficiaire, et l'attribut de compte de paiement du second terminal est un compte marchand, envoyer, par le premier terminal, le premier message de réponse de transfert d'argent au second terminal, et omettre, par le second terminal, de répondre au second message de demande de transfert d'argent ; ou
lorsque l'indicateur de rôle du premier terminal est un indicateur de rôle de bénéficiaire et l'indicateur de rôle du second terminal est un indicateur de rôle de payeur, et l'attribut de compte de paiement du premier terminal est un compte personnel, envoyer, par le premier terminal, le premier message de réponse de transfert d'argent au second terminal, et omettre, par le second terminal, de répondre au second message de demande de transfert d'argent.

4. Procédé selon l'une quelconque des revendications 1 à 3, dans lequel la détermination, par le premier terminal, d'un mode de traitement de la première demande de transfert d'argent sur la base de l'indicateur de rôle du second terminal ou d'un indicateur de rôle du premier terminal s'il existe une collision de demandes de transfert d'argent comprend spécifiquement les étapes consistant à :
si la collision de demandes de transfert d'argent existe, déterminer, par le premier terminal, si l'indicateur de rôle du premier terminal est le même que l'indicateur de rôle du second terminal, et s'ils sont différents, déterminer, par le premier terminal, le mode de traitement de la première demande de transfert d'argent sur la base de l'indicateur de rôle du second terminal et/ou de l'indicateur de rôle du premier terminal.

5. Procédé selon la revendication 1, le procédé comprenant en outre l'étape consistant à :
déterminer, par le premier terminal, si la collision de demandes de transfert d'argent existe lorsque l'indicateur de rôle du premier terminal est différent de l'indicateur de rôle du second terminal ; ou
traiter, par le premier terminal, le premier message de demande de transfert d'argent lorsque l'indicateur de rôle du premier terminal est différent de l'indicateur de rôle du second terminal.

6. Procédé selon la revendication 1, le procédé comprenant en outre, après que le premier terminal n'a pas répondu au premier message de demande de transfert d'argent, l'étape consistant à :
recevoir, par le premier terminal, ou attendre de recevoir un second message de réponse de transfert d'argent envoyé par le second terminal, le second message de réponse de transfert d'argent étant utilisé pour répondre au second message de demande de transfert d'argent.

7. Premier terminal, configuré pour établir une communication en champ proche avec un second terminal, comprenant :
une unité émettrice-réceptrice, configurée pour recevoir un premier message de demande de transfert d'argent envoyé par le second terminal, le premier message de demande de transfert d'argent comprenant un indicateur de rôle du second terminal, et
l'indicateur de rôle du second terminal étant un indicateur de rôle de payeur ou un indicateur de rôle de bénéficiaire ; et
une unité de traitement, configurée pour : s'il est déterminé qu'une collision de demandes de transfert d'argent existe, déterminer un mode de traitement du premier message de demande de transfert d'argent sur la base de l'indicateur de rôle du second terminal et/ou d'un indicateur de rôle du premier terminal,
le mode de traitement du premier message de demande de transfert d'argent consistant en ce que l'unité émettrice-réceptrice est en outre configurée pour envoyer un premier message de réponse de transfert d'argent au second terminal, le premier message de réponse de transfert d'argent étant utilisé pour répondre au premier message de demande de transfert d'argent; ou en ce que l'unité de traitement est en outre configurée pour déterminer d'omettre de répondre au premier message de demande de transfert d'argent ; et
la collision de demandes de transfert d'argent signifiant que, lorsque le premier terminal reçoit le premier message de demande de transfert d'argent, le premier terminal envoie simultanément un second message de demande de transfert d'argent au second terminal, le second message de demande de transfert d'argent comprenant l'indicateur de rôle du premier terminal, et l'indicateur de rôle du premier terminal étant un indicateur de rôle de payeur ou un indicateur de rôle de bénéficiaire,
l'unité de traitement étant spécifiquement configurée pour :
lorsque l'indicateur de rôle du premier terminal est un indicateur de rôle de payeur et/ou l'indicateur de rôle du second terminal est un indicateur de rôle de bénéficiaire, omettre de répondre au premier message de demande de transfert d'argent ; et l'unité émettrice-réceptrice étant en outre configurée pour recevoir ou attendre de recevoir un second message de réponse de transfert d'argent envoyé par le second terminal, le second message de réponse de transfert d'argent étant utilisé pour répondre au second message de demande de transfert d'argent ; et
l'unité émettrice-réceptrice étant spécifiquement configurée pour :
lorsque l'indicateur de rôle du premier terminal est un indicateur de rôle de bénéficiaire et l'indicateur de rôle du second terminal est un indicateur de rôle de payeur, envoyer le premier message de réponse de transfert d'argent au second terminal, et le second terminal omettant de répondre au second message de demande de transfert d'argent.

8. Premier terminal selon la revendication 7, dans lequel le premier message de demande de transfert d'argent comprend en outre un attribut de compte de paiement du second terminal, le second message de demande de transfert d'argent comprend en outre un attribut de compte de paiement du premier terminal, et l'attribut de compte de paiement est un compte personnel ou un compte marchand ; et
l'unité de traitement est spécifiquement configurée pour :
lorsque l'indicateur de rôle du premier terminal est un indicateur de rôle de payeur et l'indicateur de rôle du second terminal est un indicateur de rôle de bénéficiaire, et l'attribut de compte de paiement du second terminal est un compte personnel, omettre de répondre au premier message de demande de transfert d'argent ; et l'unité émettrice-réceptrice est en outre configurée pour recevoir ou attendre de recevoir un second message de réponse de transfert d'argent envoyé par le second terminal, le second message de réponse de transfert d'argent étant utilisé pour répondre au second message de demande de transfert d'argent ; ou
lorsque l'indicateur de rôle du premier terminal est un indicateur de rôle de bénéficiaire et l'indicateur de rôle du second terminal est un indicateur de rôle de payeur, et l'attribut de compte de paiement du premier terminal est un compte marchand, omettre de répondre au premier message de demande de transfert d'argent ; et l'unité émettrice-réceptrice est en outre configurée pour recevoir ou attendre de recevoir un second message de réponse de transfert d'argent envoyé par le second terminal, le second message de réponse de transfert d'argent étant utilisé pour répondre au second message de demande de transfert d'argent.

9. Premier terminal selon la revendication 7, dans lequel le premier message de demande de transfert d'argent comprend en outre un attribut de compte de paiement du second terminal, le second message de demande de transfert d'argent comprend en outre un attribut de compte de paiement du premier terminal, et l'attribut de compte de paiement est un compte personnel ou un compte marchand ; et
l'unité émettrice-réceptrice est spécifiquement configurée pour :
lorsque l'indicateur de rôle du premier terminal est un indicateur de rôle de payeur et/ou l'indicateur de rôle du second terminal est un indicateur de rôle de bénéficiaire, et l'attribut de compte de paiement du second terminal est un compte marchand, envoyer le premier message de réponse de transfert d'argent au second terminal, et le second terminal omet de répondre au second message de demande de transfert d'argent ; ou
lorsque l'indicateur de rôle du premier terminal est un indicateur de rôle de bénéficiaire et/ou l'indicateur de rôle du second terminal est un indicateur de rôle de payeur, et l'attribut de compte de paiement du premier terminal est un compte personnel, envoyer le premier message de réponse de transfert d'argent au second terminal, et le second terminal omet de répondre au second message de demande de transfert d'argent.

10. Premier terminal selon l'une quelconque des revendications 7 à 9, dans lequel, s'il existe une collision de demandes de transfert d'argent, le premier terminal détermine un mode de traitement de la première demande de transfert d'argent sur la base de l'indicateur de rôle du second terminal et/ou d'un indicateur de rôle du premier terminal, et l'unité de traitement est spécifiquement configurée pour :
si la collision de demandes de transfert d'argent existe, déterminer si l'indicateur de rôle du premier terminal est le même que l'indicateur de rôle du second terminal, et s'ils sont différents, déterminer le mode de traitement de la première demande de transfert d'argent sur la base de l'indicateur de rôle du second terminal et/ou de l'indicateur de rôle du premier terminal ;
l'unité de traitement étant en outre configurée pour :
déterminer si l'indicateur de rôle du premier terminal est le même que l'indicateur de rôle du second terminal, et s'ils sont identiques, l'unité émettrice-réceptrice étant en outre configurée pour envoyer un message de notification d'anomalie au second terminal, le message de notification d'anomalie étant utilisé pour indiquer qu'il existe une erreur dans une transaction en cours ; ou
l'unité de traitement étant en outre configurée pour omettre de répondre au premier message de demande de transfert d'argent ; ou
l'unité de traitement étant en outre configurée pour omettre de répondre au premier message de demande de transfert d'argent, et indiquer qu'il existe une erreur dans une transaction en cours.

11. Premier terminal selon l'une quelconque des revendications 7 à 10, dans lequel l'unité de traitement est en outre configurée pour :
déterminer que la collision de demandes de transfert d'argent n'existe pas, et l'unité émettrice-réceptrice envoyant un premier message de réponse de transfert d'argent au second terminal, le premier message de réponse de transfert d'argent étant utilisé pour répondre au premier message de demande de transfert d'argent.
